# EUROPEAN PATENT APPLICATION

(11) **EP 4 819 720 A1**
(43) Date of publication of application: **07.10.2026**
(21) Application number: 24896091.6
(22) Date of filing: 22.10.2024
(51) Int. Cl.: H04W 72/0446, H04W 72/50

(54) **COMMUNICATION METHOD AND APPARATUS, AND STORAGE MEDIUM**

(30) Priority: 29.11.2023 CN 202311615297
(71) Applicant: Datang Mobile Communications Equipment Co., Ltd., Beijing 100085 (CN)
(72) Inventor: BAI, Wei, Beijing 100085 (CN)
(74) Representative: Studio Torta S.p.A.
(86) International application number: PCT/CN2024/126579
(87) International publication number: WO 2025/112999

(57) **Abstract**

The present application provides a communication method and apparatus, and a storage medium. A terminal sends data to a network device through a frequency domain resource and a time domain resource, where the frequency domain resource includes multiple sub-bands, and the time domain resource includes multiple sub-segments. On a terminal side, the communication method includes: determining a target resource for transmitting target data, where the target resource includes at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol; and sending the target data to a network device on the target resource. Thus, with the multiple sub-bands, the multiple sub-segments, and the preamble occupying the same sub-band and the same sub-segment as the data symbol, pilot collisions and data collisions in uplink data transmission are mitigated.

## Description

This application claims priority to Chinese patent application No. 202311615297.8, filed with the China National Intellectual Property Administration on November 29, 2023, and entitled "COMMUNICATION METHOD AND APPARATUS, AND STORAGE MEDIUM", the entire contents of which are incorporated herein by reference.

### TECHNICAL FIELD

The present application relates to the field of communication technology, and in particular, to a communication method and apparatus, and a storage medium.

### BACKGROUND

With the development and changes of mobile communication, researchers have begun to study new wireless communication systems. The increase in the number of connected devices is one of the important driving forces for the development of new wireless communication systems. The connected devices are mainly machine-type devices. In terms of specific key technical indicators, the density of connected devices may reach tens of millions of terminals per square kilometer or higher.

Initial access and data transmission of a large number of terminals will be limited by coordination signaling resources and data transmission resources of a network, making it difficult to adopt an ordinary competitive access technique. If an orthogonal multiple access technology is adopted among the large number of terminals, even if each terminal occupies the resource of one physical resource block (physical resource block, PRB), tens of thousands of PRBs or more are needed, far exceeding the total number of PRBs in a cell. To achieve the initial access and data transmission of the large number of terminals, one way is to adopt an uncoordinated non-orthogonal multiple access technology. In the uncoordinated non-orthogonal multiple access technology, the large number of terminals need to share resources, and transmitted signals between the terminals need to be separated as much as possible to enable a base station to detect data of respective terminals respectively.

However, in the uncoordinated non-orthogonal multiple access technology, a network device cannot allocate fully orthogonal pilots to the terminals, and the terminals need to autonomously select pilots for data transmission. Given the large number of terminals and limited available pilot resources, the probability of pilot collisions and data collisions in uplink data transmission will increase, which will significantly affect the accuracy of channel estimation and lead to degradation in the performance of a wireless communication system.

### SUMMARY

The present application provides a communication method and apparatus, and a storage medium, aiming to solve a problem of increased probability of pilot collisions and data collisions during uplink data transmission.

In a first aspect, the present application provides a communication method, applied to a terminal, where the communication method includes: determining a target resource for transmitting target data, where the target resource includes at least one sub-band of multiple sub-bands and at least one sub-segment of multiple sub-segments, in a time-frequency resource for uplink data transmission, a frequency domain resource includes the multiple sub-bands and a time domain resource includes the multiple sub-segments, a sub-band occupied by a preamble of the target data is the same as a sub-band occupied by a data symbol of the target data, and a sub-segment occupied by the preamble is the same as a sub-segment occupied by the data symbol; and sending the target data to a network device on the target resource.

In one possible implementation, in the same sub-segment, the preamble and the data symbol are time-division multiplexed.

In one possible implementation, in the same sub-segment, there is a time interval between the preamble and the data symbol, and/or, a length of a time domain resource occupied by the data symbol is an integer multiple of a length of a time domain resource occupied by the preamble.

In one possible implementation, the number of transmissions of the target data is multiple, in each transmission of the target data, the sub-band occupied by the preamble is the same as the sub-band occupied by the data symbol, and the sub-segment occupied by the preamble is the same as the sub-segment occupied by the data symbol.

In one possible implementation, the target resource includes: at least two sub-bands of the multiple sub-bands and at least one sub-segment of the multiple sub-segments; or, at least one sub-band of the multiple sub-bands and at least two sub-segments of the multiple sub-segments; or, at least two sub-bands of the multiple sub-bands and at least two sub-segments of the multiple sub-segments.

In one possible implementation, the sub-band and the sub-segment of the target resource form multiple time-frequency resources, in the multiple time-frequency resources, one time-frequency resource is used for one transmission of the target data, and each of the time-frequency resources adopts same sub-carrier space.

In one possible implementation, in the multiple transmissions of the target data, a same data symbol of the target data is repeatedly transmitted; or, data symbols of different coded versions of the target data are transmitted.

In one possible implementation, in the multiple transmissions of the target data, a same preamble of the target data is repeatedly transmitted; or, multiple preambles associated with the target data are transmitted, and there is a mapping relationship between the multiple preambles.

In one possible implementation, the determining the target resource for transmitting the target data includes: determining metadata bits of the target data; determining the number of transmissions of the target data according to the metadata bits; determining a transmission resource position of the target data according to the metadata bits; and allocating, according to the number of the transmissions and the transmission resource position, the at least one sub-band of the multiple sub-bands and the at least one sub-segment of the multiple sub-segments to the target data to obtain the target resource.

In one possible implementation, before the determining the target resource for transmitting the target data, the following is further included: receiving first information from the network device, where the first information indicates the multiple sub-bands and the multiple sub-segments.

In a second aspect, the present application provides a communication method, applied to a network device, where the communication method includes: receiving target data from a terminal on a target resource, in a time-frequency resource for uplink data transmission, a frequency domain resource includes multiple sub-bands and a time domain resource includes multiple sub-segments, the target resource includes at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol; performing channel estimation on the target resource according to the preamble to obtain a channel estimation value; determining a transmission resource position of the data symbol according to the preamble; and performing, according to the preamble, the channel estimation value, and the transmission resource position of the data symbol, processing on the data symbol to obtain the target data.

In one possible implementation, in the same sub-segment, the preamble and the data symbol are time-division multiplexed.

In one possible implementation, in the same sub-segment, there is a time interval between the preamble and the data symbol, and/or, a length of a time domain resource occupied by the data symbol is an integer multiple of a length of a time domain resource occupied by the preamble.

In one possible implementation, the number of transmissions of the target data is multiple, in each transmission of the target data, the sub-band occupied by the preamble is the same as the sub-band occupied by the data symbol, and the sub-segment occupied by the preamble is the same as the sub-segment occupied by the data symbol.

In one possible implementation, the target resource includes: at least two sub-bands of the multiple sub-bands and at least one sub-segment of the multiple sub-segments; or, at least one sub-band of the multiple sub-bands and at least two sub-segments of the multiple sub-segments; or, at least two sub-bands of the multiple sub-bands and at least two sub-segments of the multiple sub-segments.

In one possible implementation, the sub-band and the sub-segment of the target resource form multiple time-frequency resources, in the multiple time-frequency resources, one time-frequency resource is used for one transmission of the target data, and each of the time-frequency resources adopts same sub-carrier space.

In one possible implementation, in the multiple transmissions of the target data, a same data symbol of the target data is repeatedly transmitted; or, data symbols of different coded versions of the target data are transmitted.

In one possible implementation, in the multiple transmissions of the target data, a same preamble of the target data is repeatedly transmitted; or, multiple preambles associated with the target data are transmitted, and there is a mapping relationship between the multiple preambles.

In one possible implementation, the performing the channel estimation on the target resource according to the preamble to obtain the channel estimation value includes: performing channel estimation respectively based on each preamble among the same preamble transmitted repeatedly or the multiple associated preambles, to obtain a channel estimation value respectively corresponding to each preamble, where the channel estimation value corresponding to the preamble includes a channel estimation value of a sub-band and a sub-segment where the preamble is located.

In one possible implementation, the determining the transmission resource position of the data symbol according to the preamble includes: determining metadata bits of the target data according to the preamble; and determining the transmission resource position according to the metadata bits.

In one possible implementation, before the receiving the target data from the terminal on the target resource, the following is further included: in a channel resource for uplink data transmission, dividing the frequency domain resource into the multiple sub-bands, and dividing the time domain resource into the multiple sub-segments; and sending first information to the terminal, where the first information indicates the multiple sub-bands and the multiple sub-segments.

In a third aspect, the present application provides a communication apparatus, applied to a terminal, where the communication apparatus includes a memory, a transceiver, and a processor; the memory is configured to store a computer program; the transceiver is configured to receive and transmit data under control of the processor; and the processor is configured to read the computer program in the memory and execute following operations: determining a target resource for transmitting target data, where in a time-frequency resource for uplink data transmission, a frequency domain resource includes multiple sub-bands and a time domain resource includes multiple sub-segments, the target resource includes at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol; and sending the target data to a network device on the target resource.

In one possible implementation, in the same sub-segment, the preamble and the data symbol are time-division multiplexed.

In one possible implementation, in the same sub-segment, there is a time interval between the preamble and the data symbol, and/or, a length of a time domain resource occupied by the data symbol is an integer multiple of a length of a time domain resource occupied by the preamble.

In one possible implementation, the number of transmissions of the target data is multiple, in each transmission of the target data, the sub-band occupied by the preamble is the same as the sub-band occupied by the data symbol, and the sub-segment occupied by the preamble is the same as the sub-segment occupied by the data symbol.

In one possible implementation, the target resource includes: at least two sub-bands of the multiple sub-bands and at least one sub-segment of the multiple sub-segments; or, at least one sub-band of the multiple sub-bands and at least two sub-segments of the multiple sub-segments; or, at least two sub-bands of the multiple sub-bands and at least two sub-segments of the multiple sub-segments.

In one possible implementation, the sub-band and the sub-segment of the target resource form multiple time-frequency resources, in the multiple time-frequency resources, one time-frequency resource is used for one transmission of the target data, and each of the time-frequency resources adopts same sub-carrier space.

In one possible implementation, in the multiple transmissions of the target data, a same data symbol of the target data is repeatedly transmitted; or, data symbols of different coded versions of the target data are transmitted.

In one possible implementation, in the multiple transmissions of the target data, a same preamble of the target data is repeatedly transmitted; or, multiple preambles associated with the target data are transmitted, and there is a mapping relationship between the multiple preambles.

In one possible implementation, the processor is further configured to perform following operations: determining metadata bits of the target data; determining the number of transmissions of the target data according to the metadata bits; determining a transmission resource position of the target data according to the metadata bits; and allocating, according to the number of the transmissions and the transmission resource position, the at least one sub-band of the multiple sub-bands and the at least one sub-segment of the multiple sub-segments to the target data to obtain the target resource.

In one possible implementation, the processor is further configured to perform following operations: receiving first information from the network device, where the first information indicates the multiple sub-bands and the multiple sub-segments.

In a fourth aspect, the present application provides a communication apparatus, applied to a network device, where the communication apparatus includes a memory, a transceiver, and a processor; the memory is configured to store a computer program; the transceiver is configured to receive and transmit data under control of the processor; and the processor is configured to read the computer program in the memory and execute following operations: receiving target data from a terminal on a target resource, where in a time-frequency resource for uplink data transmission, a frequency domain resource includes multiple sub-bands and a time domain resource includes multiple sub-segments, the target resource includes at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol; performing channel estimation on the target resource according to the preamble to obtain a channel estimation value; determining a transmission resource position of the data symbol according to the preamble; and performing, according to the preamble, the channel estimation value, and the transmission resource position of the data symbol, processing on the data symbol to obtain the target data.

In one possible implementation, in the same sub-segment, the preamble and the data symbol are time-division multiplexed.

In one possible implementation, in the same sub-segment, there is a time interval between the preamble and the data symbol, and/or, a length of a time domain resource occupied by the data symbol is an integer multiple of a length of a time domain resource occupied by the preamble.

In one possible implementation, the number of transmissions of the target data is multiple, in each transmission of the target data, the sub-band occupied by the preamble is the same as the sub-band occupied by the data symbol, and the sub-segment occupied by the preamble is the same as the sub-segment occupied by the data symbol.

In one possible implementation, the target resource includes: at least two sub-bands of the multiple sub-bands and at least one sub-segment of the multiple sub-segments; or, at least one sub-band of the multiple sub-bands and at least two sub-segments of the multiple sub-segments; or, at least two sub-bands of the multiple sub-bands and at least two sub-segments of the multiple sub-segments.

In one possible implementation, the sub-band and the sub-segment of the target resource form multiple time-frequency resources, in the multiple time-frequency resources, one time-frequency resource is used for one transmission of the target data, and each of the time-frequency resources adopts same sub-carrier space.

In one possible implementation, in the multiple transmissions of the target data, a same data symbol of the target data is repeatedly transmitted; or, data symbols of different coded versions of the target data are transmitted.

In one possible implementation, in the multiple transmissions of the target data, a same preamble of the target data is repeatedly transmitted; or, multiple preambles associated with the target data are transmitted, and there is a mapping relationship between the multiple preambles.

In one possible implementation, the processor is further configured to perform following operations: performing channel estimation respectively based on each preamble among the same preamble transmitted repeatedly or the multiple associated preambles, to obtain a channel estimation value respectively corresponding to each preamble, wherein the channel estimation value corresponding to the preamble includes a channel estimation value of a sub-band and a sub-segment where the preamble is located.

In one possible implementation, the processor is further configured to perform following operations: determining metadata bits of the target data according to the preamble; and determining the transmission resource position according to the metadata bits.

In one possible implementation, the processor is further configured to perform following operations: in a channel resource for uplink data transmission, dividing the frequency domain resource into the multiple sub-bands, and dividing the time domain resource into the multiple sub-segments; and sending first information to the terminal, where the first information indicates the multiple sub-bands and the multiple sub-segments.

In a fifth aspect, the present application provides a communication apparatus, applied to a terminal, where the communication apparatus includes: a resource determination unit, configured to determine a target resource for transmitting target data, where in a time-frequency resource for uplink data transmission, a frequency domain resource includes multiple sub-bands and a time domain resource includes multiple sub-segments, the target resource includes at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol; and a sending unit, configured to send the target data to a network device on the target resource.

In one possible implementation, in the same sub-segment, the preamble and the data symbol are time-division multiplexed.

In one possible implementation, in the same sub-segment, there is a time interval between the preamble and the data symbol, and/or, a length of a time domain resource occupied by the data symbol is an integer multiple of a length of a time domain resource occupied by the preamble.

In one possible implementation, the number of transmissions of the target data is multiple, in each transmission of the target data, the sub-band occupied by the preamble is the same as the sub-band occupied by the data symbol, and the sub-segment occupied by the preamble is the same as the sub-segment occupied by the data symbol.

In one possible implementation, the target resource includes: at least two sub-bands of the multiple sub-bands and at least one sub-segment of the multiple sub-segments; or, at least one sub-band of the multiple sub-bands and at least two sub-segments of the multiple sub-segments; or, at least two sub-bands of the multiple sub-bands and at least two sub-segments of the multiple sub-segments.

In one possible implementation, the sub-band and the sub-segment of the target resource form multiple time-frequency resources, in the multiple time-frequency resources, one time-frequency resource is used for one transmission of the target data, and each of the time-frequency resources adopts same sub-carrier space.

In one possible implementation, in the multiple transmissions of the target data, a same data symbol of the target data is repeatedly transmitted; or, data symbols of different coded versions of the target data are transmitted.

In one possible implementation, in the multiple transmissions of the target data, a same preamble of the target data is repeatedly transmitted; or, multiple preambles associated with the target data are transmitted, and there is a mapping relationship between the multiple preambles.

In one possible implementation, the resource determination unit is specifically configured to: determine metadata bits of the target data; determine the number of transmissions of the target data according to the metadata bits; determine a transmission resource position of the target data according to the metadata bits; and allocate, according to the number of the transmissions and the transmission resource position, the at least one sub-band of the multiple sub-bands and the at least one sub-segment of the multiple sub-segments to the target data to obtain the target resource.

In one possible implementation, the communication apparatus further includes: a receiving unit, configured to receive first information from the network device, where the first information indicates the multiple sub-bands and the multiple sub-segments.

In a sixth aspect, the present application provides a communication apparatus, applied to a network device, where the communication apparatus includes: a receiving unit, configured to receive target data from a terminal on a target resource, where in a time-frequency resource for uplink data transmission, a frequency domain resource includes multiple sub-bands and a time domain resource includes multiple sub-segments, the target resource includes at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol; a channel estimation unit, configured to perform channel estimation on the target resource according to the preamble, to obtain a channel estimation value; a resource position determination unit, configured to determine a transmission resource position of the data symbol according to the preamble; and a data processing unit, configured to perform, according to the preamble, the channel estimation value, and the transmission resource position of the data symbol, processing on the data symbol to obtain the target data.

In one possible implementation, in the same sub-segment, the preamble and the data symbol are time-division multiplexed.

In one possible implementation, in the same sub-segment, there is a time interval between the preamble and the data symbol, and/or, a length of a time domain resource occupied by the data symbol is an integer multiple of a length of a time domain resource occupied by the preamble.

In one possible implementation, the number of transmissions of the target data is multiple, in each transmission of the target data, the sub-band occupied by the preamble is the same as the sub-band occupied by the data symbol, and the sub-segment occupied by the preamble is the same as the sub-segment occupied by the data symbol.

In one possible implementation, the target resource includes: at least two sub-bands of the multiple sub-bands and at least one sub-segment of the multiple sub-segments; or, at least one sub-band of the multiple sub-bands and at least two sub-segments of the multiple sub-segments; or, at least two sub-bands of the multiple sub-bands and at least two sub-segments of the multiple sub-segments.

In one possible implementation, the sub-band and the sub-segment of the target resource form multiple time-frequency resources, in the multiple time-frequency resources, one time-frequency resource is used for one transmission of the target data, and each of the time-frequency resource adopts same sub-carrier space.

In one possible implementation, in the multiple transmissions of the target data, a same data symbol of the target data is repeatedly transmitted; or, data symbols of different coded versions of the target data are transmitted.

In one possible implementation, in the multiple transmissions of the target data, a same preamble of the target data is repeatedly transmitted; or, multiple preambles associated with the target data are transmitted, and there is a mapping relationship between the multiple preambles.

In one possible implementation, the channel estimation unit is specifically configured to: perform channel estimation respectively based on each preamble among the same preamble transmitted repeatedly or the multiple associated preambles, to obtain a channel estimation value respectively corresponding to each preamble, where the channel estimation value corresponding to the preamble includes a channel estimation value of a sub-band and a sub-segment where the preamble is located.

In one possible implementation, the resource position determination unit is specifically configured to: determine metadata bits of the target data according to the preamble; and determine the transmission resource position according to the metadata bits.

In one possible implementation, the communication apparatus further includes: a resource dividing unit, configured to, in a channel resource for uplink data transmission, divide the frequency domain resource into the multiple sub-bands, and divide the time domain resource into the multiple sub-segments; and a sending unit, configured to send first information to the terminal, where the first information indicates the multiple sub-bands and the multiple sub-segments.

In a seventh aspect, the present application provides a processor-readable storage medium, where the processor-readable storage medium stores a computer program, and the computer program is used to enable a processor to execute the communication method provided in the first aspect.

In an eighth aspect, the present application provides a computer program product including an instruction which, when run on a computer, enables the computer to execute the communication method provided in the first aspect.

In a ninth aspect, the present application provides a communication system, including the terminal according to any one of the above and the network device according to any one of the above.

According to the communication method and apparatus, and the storage medium provided by the present application, the preamble of the target data and the data symbol of the target data occupy the same sub-band and the same sub-segment, so that the preamble of the target data can serve as a pilot of the data symbol for channel estimation without the need for additional insertion of a pilot, thereby mitigating occurrence of pilot collisions during uplink data transmission; and the frequency resource is divided into the multiple sub-bands and the time resource is divided into the multiple sub-segments, allowing different uplink data transmissions to occupy different sub-bands and different sub-segments as much as possible, thereby mitigating occurrence of pilot collisions and data collisions during the uplink data transmission. Furthermore, adverse effects of the pilot collisions and the data collisions on channel estimation and performance of a wireless communication system are reduced, and accuracy of the channel estimation and the performance of the wireless communication system are improved.

It should be understood that the content described in the above-mentioned summary section is not intended to limit key or important features of embodiments of the present application, nor is it used to restrict the scope of the present application. Other features of the present application will become easily understandable through the following description.

### BRIEF DESCRIPTION OF DRAWINGS

To illustrate technical solutions in the present application or the prior art more clearly, the following will briefly introduce drawings used in the description of the embodiments or the prior art. Obviously, the drawings described below are some embodiments of the present application. For persons of ordinary skills in the art, other drawings may further be obtained according to these drawings without making creative efforts.
FIG. 1 is an example diagram of uplink data transmission based on URAT.
FIG. 2 is a schematic diagram of a CSA scheme.
FIG. 3 is a schematic structural diagram of four types of preamble formats with a sequence length of 839.
FIG. 4 is a schematic diagram of RE occupancy for DMRS type 1.
FIG. 5 is a schematic diagram of RE occupancy for DMRS type 2.
FIG. 6 is an example diagram of an application scenario provided by an embodiment of the present application.
FIG. 7 is a first schematic flowchart of a communication method provided by an embodiment of the present application.
FIG. 8 is a second schematic flowchart of a communication method provided by an embodiment of the present application.
FIG. 9 is an example diagram of data transmission on a single sub-band and a single sub-segment provided by an embodiment of the present application.
FIG. 10 is an example diagram of data transmission on two sub-bands and a single sub-segment provided by an embodiment of the present application.
FIG. 11 is an example diagram of data transmission on a single sub-band and two sub-segments provided by an embodiment of the present application.
FIG. 12 is a first example diagram of data transmission on two sub-bands and two sub-segments provided by an embodiment of the present application.
FIG. 13 is a second example diagram of data transmission on two sub-bands and two sub-segments provided by an embodiment of the present application.
FIG. 14 is a first schematic structural diagram of a communication apparatus provided by an embodiment of the present application.
FIG. 15 is a second schematic structural diagram of a communication apparatus provided by an embodiment of the present application.
FIG. 16 is a third schematic structural diagram of a communication apparatus provided by an embodiment of the present application.
FIG. 17 is a fourth schematic structural diagram of a communication apparatus provided by an embodiment of the present application.

### DESCRIPTION OF EMBODIMENTS

In the present application, "at least one" means one or more, and "multiple" means two or more. "And/or" describes an association relationship of associated objects, indicating that there may be three kinds of relationships, for example, A and/or B may be expressed as: A alone, both A and B, B alone, where A and B may be either singular or plural. The character "/" generally indicates that the associated objects before and after are in an "alternative" relationship. "At least one of the following" or similar expressions thereof refer to any combination of these items, including any combination of a single item or multiple items. For example, at least one of a, b, or c, may be expressed as: a, b, c, a-b, a-c, b-c, or a-b-c, where a, b, c may be single or multiple.

As can be understood, steps or operations in the embodiments of the present application are merely examples. Other operations or variations of various operations may be executed in the embodiments of the present application. Moreover, various steps may be executed in an order different from that presented in the embodiments of the present application, and it is possible that not all operations in the embodiments of the present application are executed.

Below, with reference to the drawings in the embodiments of the present application, technical solutions in the embodiments of the present application will be clearly and completely described. Obviously, the described embodiments are only a part of the embodiments of the present application, and not all the embodiments. Based on the embodiments in the present application, all other embodiments obtained by the persons of ordinary skills in the art without making creative efforts are within the protection scope of the present application.

The technical solutions provided by the embodiments of the present application may be applied to various systems, especially 5G and 6G systems. For example, a system to which the embodiments of the present application is applicable may be a global system of mobile communication (global system of mobile communication, GSM), a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, a LTE frequency division duplex (frequency division duplex, FDD) system, a LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These various systems all include a terminal and a network device. The systems may further include a core network part, such as an evolved packet system (Evloved Packet System, EPS), a 5G system (5GS), etc.

A terminal involved in the embodiments of the present application may refer to a device that provides voice and/or data connectivity to a user, a handheld device with a wireless connectivity function, or other processing devices connected to a wireless modem, etc. In different systems, names of terminals may be different. For example, in a 5G system, the terminal may be referred to as user equipment (User Equipment, UE). A wireless terminal may communicate with one or more core networks (Core Network, CN) via a radio access network (Radio Access Network, RAN). The wireless terminal may be a mobile terminal, such as a mobile phone (or referred to as "cellular" phone) and a computer with a mobile terminal which, for example, may be a portable, pocket-sized, handheld, computer built-in or vehicle-mounted mobile apparatus that exchange voice and/or data with the radio access network. For example, a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), etc. The wireless terminal may also be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), a user device (user device), which is not limited in the embodiments of the present application.

A network device involved in the embodiments of the present application may be a base station, which may include multiple cells providing services to a terminal. Depending on a specific application scenario, the base station may also be referred to as an access point, or may be a device in an access network that communicates with a wireless terminal over one or more sectors on an air interface, or may have other names. The network device may be configured to interchange received over-the-air frames with Internet protocol (Internet Protocol, IP) packets, acting as a router between the wireless terminal and the remainder of the access network, where the remainder of the access network may include an Internet protocol (IP) communication network. The network device may further coordinate attribute management of the air interface. For example, the network device involved in the embodiments of the present application may be a network device (Base Transceiver Station, BTS) in a global system for mobile communications (Global System for Mobile communications, GSM) or code division multiple access (Code Division Multiple Access, CDMA), or a network device (NodeB) in wide-band code division multiple access (Wide-band Code Division Multiple Access, WCDMA), or an evolutional network device (evolutional Node B, eNB or e-NodeB) in a long term evolution (long term evolution, LTE) system, a 5G base station (gNB) in a 5G network architecture (next generation system), or a home evolved base station (Home evolved Node B, HeNB), a relay node (relay node), a home base station (femto), a pico base station (pico), etc., which is not limited in the embodiments of the present application. In some network structures, the network device may include a central unit (central unit, CU) node and a distributed unit (distributed unit, DU) node. The central unit and the distributed unit may be arranged together or separately in terms of geography.

With the development and changes of mobile communication, the number of connected devices has increased. To provide channel resources for uplink data transmission of a large number of terminals, an uncoordinated random access and transmission technology (uncoordinated random access and transmission, URAT) may be adopted. In this technology, the large number of terminals share channel resources, so it is necessary to distinguish transmitted signals of different terminals as much as possible, to enable a network device to detect the data of respective terminals. The network device, as a receiving end, may separate multi-user signals through successive interference cancellation (successive interference cancellation, SIC). Performance of the SIC depends on accuracy of channel estimation and channel state information. However, since this technology lacks network coordination, fully orthogonal pilots cannot be allocated to the terminals, and the terminals need to autonomously select transmitted pilots. In a case of a large number of terminals and limited available pilot resources, the autonomous selection of the transmitted pilots by the terminals increases probability of pilot collisions. Occurrence of the pilot collisions will significantly affect the accuracy of the channel estimation and, in turn, the performance of the SIC at the receiving end.

The following describes technologies related to scenarios of a large number of terminals.

### (1) URAT

URAT is the integration and upgrade of the random access technology and the multiple access transmission technology. In the URAT, initial access and data transmission are no longer two independent processes, but integrated into one process to support initial access and data transmission of a large number of terminals, reducing latency and improving a success rate of access and transmission.

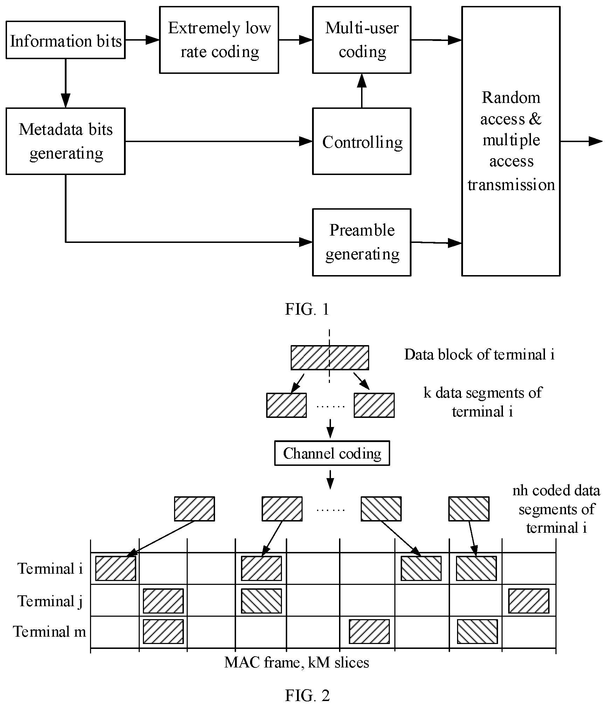

FIG. 1 is an example diagram of uplink data transmission based on the URAT. As shown in FIG. 1, a process of uplink data transmission at a terminal side according to a URAT scheme includes: (1) metadata bits (metadata bits) are generated based on information bits (information bits, which may include a terminal's identifier) of data to be sent, for example, a cyclic redundancy check (cyclic redundancy check, CRC) of the information bits may be used as the metadata bits; (2) after extremely low rate coding (extremely low rate coding) and multi-user coding (multi-user coding), the information bits are carried by a channel similar to a physical uplink shared channel (physical uplink shared channel, PUSCH), where the extremely low rate coding is used to achieve non-orthogonal multiple access transmission, and the multi-user coding is used to further increase a distance between coding symbols of different terminals and improve performance of the multiple access transmission; and (3) integration of random access and multiple access transmission, on the one hand, a preamble (preamble) signal for the random access and a data signal for the multiple access transmission are multiplexed for transmission; and on the other hand, metadata bits carried by the preamble are used to control the multi-user coding, including scrambling, interleaving, repetition transmission patterns, redundancy version (redundancy version, RV), non-orthogonal multiple access (pattern division multiple access, PDMA) spreading sequence, power, etc.

Significance of the URAT lies in: (1) through joint transmission processing of user identity information (i.e., the metadata bits) and user data information (i.e., the information bits), dynamic coordination at a network side is simplified, effectively increasing the number of accessed users, which is suitable for access and transmission of the large number of terminals; (2) through the integration of the initial access and the data transmission processes, a receiving end simultaneously obtains the user identity information and the user data information, shortening transmission delay, which is suitable for burst transmission of small packet data; and (3) in the multi-user coding, an enhanced unequal diversity transmission technology is adopted, and in this technology, unequal diversity transmission is implemented for different user sets, that is, the different user sets adopt different numbers of repetition transmissions, which can effectively improve a success rate of access and transmission, and is conducive to access and transmission of a high-priority user set.

### (2) Coding slotted aloha (coded slotted Aloha, CSA) scheme

FIG. 2 is a schematic diagram of a CSA scheme. As shown in FIG. 2, on a terminal side: an i-th terminal may divide one data block (burst) to be sent into k data segments (segment), where a length of each data segment is the same; after channel coding of the k data segments, nh coded data segments are generated, where the length of the data segment before the coding is the same as a length of the data segment after the coding; one media access control (media access control, MAC) frame may be evenly divided into kM slices (slice), and a coded data segment is correspondingly transmitted on each slice; the i-th terminal may randomly select nh slices from the kM slices and transmit the nh coded data segments, where each data segment may contain position information of other data segments. In the CSA scheme, terminals (such as terminal i, terminal j, terminal m) may have different nh values, and positions of nh slices among the terminals may not be exactly the same to achieve multi-access transmission where terminals can be distinguished. On a network side, using received data segments without interference or with minimal interference, k data segments are decoded, and coded data segments on other slices are obtained; and then, using the SIC technology, data segments of other terminals are finally obtained.

It can be seen that the CSA scheme can significantly improve a system's throughput, but implementation complexity is relatively high.

### (3) Preambles in new radio (new radio, NR)

In NR, four types of preamble formats with a length of 839 (referred to as long preamble formats) and nine types of preamble formats with a length of 139 (referred to as short preamble formats) are supported.

The four types of long preamble formats are shown in Table 1:

**Table 1**

| Format | L_{RA} | Δf^{RA} | Nᵤ | ${N}_{CP}^{RA}$ | Support for restricted sets | Application scenario |
|---|---|---|---|---|---|---|
| 0 | 839 | 1.25kHz | 24576 k | 3168 k | TypeA, TypeB | LTE spectrum reuse scenario |
| 1 | 839 | 1.25kHz | 2 × 24576 k | 21024 k | TypeA, TypeB | long-range coverage, up to 100 km |
| 2 | 839 | 1.25kHz | 4 × 24576 k | 4688 k | TypeA, TypeB | enhanced coverage scenario |
| 3 | 839 | 5kHz | 4 × 6144 k | 3168 k | TypeA, TypeB | high-speed mobility scenario |

In table 1, L_{RA} represents a length of a preamble, Δf^{RA} represents sub-carrier space (sub-carrier space, SCS) of the preamble, Nᵤ represents a duration of the preamble, ${N}_{CP}^{RA}$ represents a duration of a cyclic prefix (cyclic prefix, CP). Units of Nᵤ and ${N}_{CP}^{RA}$ are k = Tₛ/T_{c} = 64, T_{c} = 1/(Δfₘₐₓ · N_{f}), Δfₘₐₓ = 480 × 10³Hz, N_{f} = 4096, Tₛ = 1/(Δf_{ref} · N_{f,ref}), Δf_{ref} = 15 × 10³Hz, N_{f,ref} = 2048. Δfₘₐₓ is a maximum sub-carrier space, N_{f} is a Fourier transform point number, Δf_{ref} is a reference maximum sub-carrier space, and N_{f,ref} is a reference Fourier transform point number.

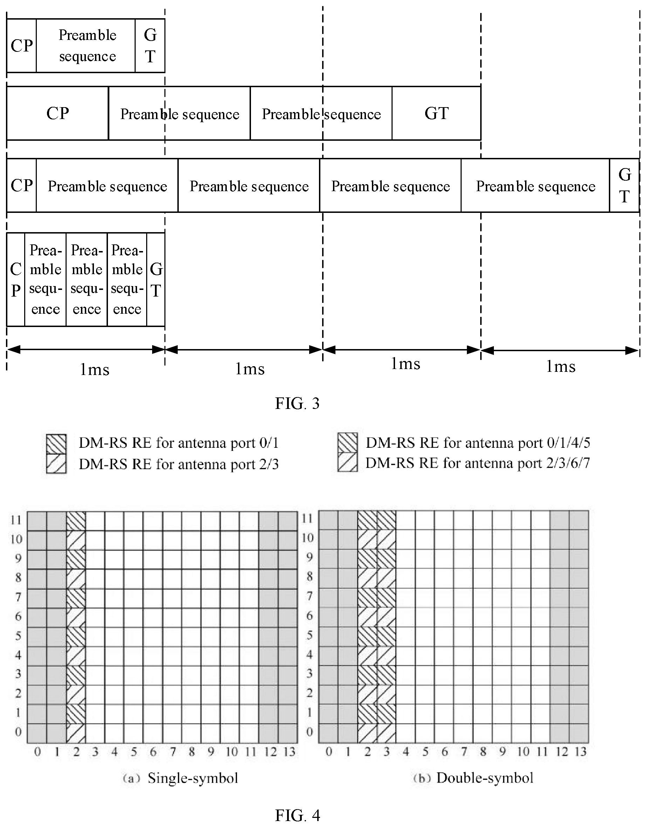

As can be seen from Table 1, in long preamble formats, compared with format 0, long preamble format 1 has a longer CP and a longer duration, achieving a coverage range of 100 kilometers (km). Long preamble format 3 adopts larger SCS and supports a high-speed mobility scenario. Guard time (guard time, GT) is not shown in Table 1. Instead, the GT is implicitly included in a long preamble format by aligning a time slot where the long preamble format is located with other time slots based on a 1-millisecond (ms) boundary (as shown in FIG. 3, where FIG. 3 is a schematic structural diagram of four types of preamble formats with a sequence length of 839).

Preamble sequences contained in format 0, format 1, format 2, and format 3 correspond to one orthogonal frequency-division multiplexing (orthogonal frequency-division multiplexing, OFDM) symbol, supporting two types of SCS: 1.25 kHz and 5 kHz, and supporting two cyclic shift restricted sets respectively: restricted type A and restricted type B. Maximum frequency shift ranges supported by type A and type B are SCS and 2SCS, respectively: a restricted set of type A is suitable for general mobile scenarios, and a corresponding Doppler frequency shift is within the SCS; a restricted set of type B is applied to ultra-high-speed scenarios, and a corresponding Doppler frequency shift is between the SCS and the 2SCS.

The nine types of short preamble formats are shown in Table 2:

**Table 2**

| Format | L_{RA} | Δf^{RA} | Nᵤ | ${N}_{CP}^{RA}$ | Application scenario |
|---|---|---|---|---|---|
| A1 | 139 | 15 × 2^{µ}kHz | 2 × 2048 k · 2^{-µ} | 288 k · 2^{-µ} | Microcell |
| A2 | 139 | 15 × 2^{µ}kHz | 4 × 2048 k · 2^{-µ} | 576 k · 2^{-µ} | Conventional cell |
| A3 | 139 | 15 × 2^{µ}kHz | 6 × 2048 k · 2^{-µ} | 864 k · 2^{-µ} | Conventional cell |
| B1 | 139 | 15 × 2^{µ}kHz | 2 × 2048 k · 2^{-µ} | 216 k · 2^{-µ} | Microcell |
| B2 | 139 | 15 × 2^{µ}kHz | 4 µ 2048 k · 2^{-µ} | 360 k · 2^{-µ} | Conventional cell |
| B3 | 139 | 15 × 2^{µ}kHz | 6 × 2048 k · 2^{-µ} | 504 k · 2^{-µ} | Conventional cell |
| B4 | 139 | 15 × 2^{µ}kHz | 12 × 2048 k · 2^{-µ} | 936 k · 2^{-µ} | Conventional cell |
| C0 | 139 | 15 × 2^{µ}kHz | 2048 k · 2^{-µ} | 1240k · 2^{-µ} | Conventional cell |
| C2 | 139 | 15 × 2^{µ}kHz | 4 × 2048 k · 2^{-µ} | 2048 k · 2^{-µ} | Conventional cell |

µ = {0,1,2,3}. Short preamble with a sequence length of 139 is used for the 6GHz frequency band, smaller cell coverage, and scenarios where a network device employ multi-beam scanning.

As shown in Table 2, the short preamble formats with the sequence length of 139 support four types of SCS: 15kHz, 30kHz, 60kHz, and 120kHz. Since the SCS is not less than 15kHz, the restricted set is not supported. In Table 2, SCS, CP lengths, sequence lengths, and application scenarios of nine independent short preamble formats (A1, A2, A3, B1, B2, B3, B4, C0, and C2) are defined. Parameter meanings therein are the same as those in Table 1.

In a time-frequency resource configuration of a physical random access channel (physical random access channel, PRACH), to more efficiently utilize time-frequency resources and reduce signaling overhead, the short preamble formats A1, A2, A3, B1, B4, C0, and C2 in Table 2 are configured to be used separately. B2 and B3 can only be combined with A2 and A3 to be used as A2/B2 and A3/B3; B1 may be configured to be used separately or may be combined with A1 to be used as A1/B1. Therefore, for the short preamble formats with the sequence length of 139, a total of 10 types of configurations are supported: A1, A2, A3, B1, B4, A1/B1, A2/B2, A3/B3, C0, and C2.

### (4) Demodulation reference signal (demodulation reference signal, DMRS) in NR

In NR, DMRS adopts a front-loaded design approach. Within each scheduling time unit, a position where a DMRS first appears should be as close as possible to a start point of scheduling.

In NR, multiplexing between DM- RS ports is performed by means of frequency division multiplexing (frequency division multiplexing, FDM) and code division multiplexing (code division multiplexing, CDM). Within each CDM group, multiple ports are distinguished by orthogonal cover codes (orthogonal cover code, OCC). CDM groups are distinguished by FDM.

NR supports two DM-RS types, and a used DM-RS type is configured by higher-layer signaling. A DMRS may include one (single-symbol DMRS) or two (double-symbol DMRS) OFDM symbols. Multiplexing and configuration methods of the two DMRS types are specifically described as follows.

FIG. 4 is a schematic diagram of resource element (resource element, RE) occupancy for DMRS type 1. In FIG. 4, one grid represents one RE, that is, one time-frequency unit. The horizontal axis represents frequency domain resources, so each grid on the horizontal axis corresponds to one OFDM symbol. The vertical axis represents time domain resources, so each grid on the vertical axis corresponds to one time domain unit. A gray grid represents an RE occupied by a control signal, and grids filled with different diagonal patterns indicate REs occupied by DMRSs. In DMRS type 1, for a single-symbol DMRS, sub-carriers within one OFDM symbol may be divided into two groups of frequency-division comb-shaped resources (DM-RS REs for antenna port 0/1 and DM-RS REs for antenna port 2/3), where each group of comb-shaped resources constitutes one CDM group. Within the CDM group, 2-port multiplexing is supported with 2 OCCs, and up to 4 ports can be supported. For a double-symbol DMRS, sub-carriers within one OFDM symbol may be divided into two groups of frequency-division comb-shaped resources (DM-RS REs for antenna port 0/1/4/5 and DM-RS REs for antenna port 2/3/6/7). The double-symbol DMRS adds time domain OCCs on the basis of the single-symbol DMRS structure. Each group of comb-shaped resources occupies two consecutive OFDM symbols. Each CDM group achieves 4 orthogonal ports through 4 time-frequency domain OCCs, thus supporting a maximum of 8 orthogonal ports.

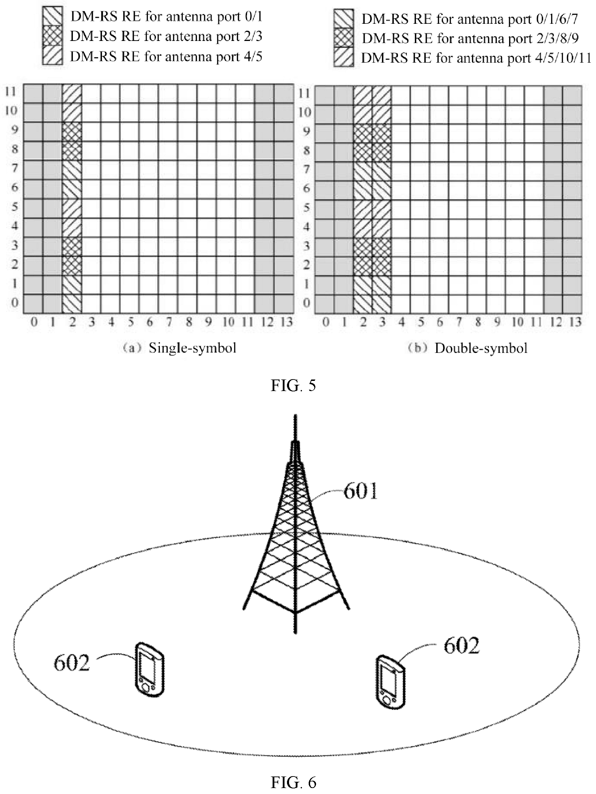

FIG. 5 is a schematic diagram of RE occupancy for DMRS type 2. In FIG. 5, one grid represents one RE, that is, one time-frequency unit. The horizontal axis represents frequency domain resources, so each grid on the horizontal axis corresponds to one ODFM symbol. The vertical axis represents time domain resources, so each grid on the vertical axis corresponds to one time domain unit. A gray grid represents an RE occupied by a control signal, and grids filled with different diagonal patterns indicate REs occupied by DMRSs. In DMRS type 2, for a single-symbol DMRS, sub-carriers within one OFDM symbol are divided into 3 CDM groups (DM-RS REs for antenna port 0/1, DM-RS REs for antenna port 2/3, and DM-RS REs for antenna port 4/5), each CDM group consisting of two adjacent sub-carriers. Within the CDM group, 2-port multiplexing and inter-group FDM are supported with 2 OCCs, and thus, up to 6 ports can be supported. For a double-symbol DMRS, sub-carriers within one OFDM symbol may be divided into three groups of frequency-division comb-shaped resources (DM-RS REs for antenna port 0/1/6/7, DM-RS REs for antenna port 2/3/8/9, and DM-RS REs for antenna port 4/5/10/11). The double-symbol DMRS adds time-domain OCCs on the basis of the single-symbol structure. Each CDM group occupies two consecutive OFDM symbols. Each CDM group supports 4 orthogonal ports through 4 time-frequency domain OCCs, and 3 CDM groups support up to 12 ports.

In addition, in a high-speed mobility scenario, in addition to the front-loaded DMRS, NR stipulates that more DMRS symbols should be inserted during a scheduling duration to ensure accurate estimation of a time-varying channel. In a NR system, a structure combining the front-loaded DMRS and time domain density-configurable additional DMRS is adopted. A pattern of each group of additional DMRS is a repetition of the front-loaded DMRS. Therefore, consistent with the front-loaded DMRS, each group of additional DMRS can occupy up to two consecutive OFDM symbols. According to a specific usage scenario and mobility, up to 3 groups of additional DMRS can be configured. The number of additional DMRSs depends on a high-level parameter configuration and a specific scheduling duration.

The above-mentioned technologies related to the scenario of the large number of terminals have following disadvantages:
(1) In the CSA scheme for slotted Aloha transmission, system performance relies on pilot-based channel estimation performance. In the scenario of the large number of terminals, there will still be a collision problem between data and pilots. Once a pilot collision occurs, it will significantly affect accuracy of channel estimation, leading to degradation in system performance. In addition, in an uncoordinated CSA scheme, multiple coding transmissions are performed in the time domain, and a terminal corresponding to each data transmission may be different from a terminal corresponding to a previous data transmission (for example, data of terminal i, data of terminal j, and data of terminal m all need to be transmitted three times, then the data of terminal i is transmitted the first time, the data from terminal j may be transmitted the second time, the data from terminal m may be transmitted the third time, and the terminal corresponding to each data transmission is different from the terminal corresponding to the previous data transmission), which increase complexity of SIC at a receiving end.
(2) A preamble may be used as a pilot, and channel estimation performance based on the preamble is better than channel estimation performance based on the pilot. However, bandwidth occupied by the preamble is relatively small, data may be scattered across an entire shared time-frequency resource, and the preamble cannot occupy same bandwidth as the data. Therefore, the preamble cannot provide channel estimation over an entire frequency band required by the data.
(3) In DMRS type 2, a double-symbol DMRS supports a maximum of 12 users only. In a case where the large number of terminals autonomously select pilots, there is a serious problem of pilot collisions. It cannot be directly applied to the URAT scheme and requires enhanced design to support more users.

In the URAT scheme, the preamble may be combined with the DMRS: the preamble is transmitted on one sub-band within a bandwidth part (bandwidth part, BWP), and the receiving end obtains the transmitted preamble by correlation detection; a data symbol (Data) is sent on relatively large bandwidth (or multiple sub-bands) within the BWP, the receiving end obtains a detection method of the data symbol according to information carried by the preamble, and at the same time, obtains channel estimation according to the DMRS on the relatively large bandwidth, and performs detection of the data symbol according to the transmitted preamble and the channel estimation. That is: through the detection of the preamble, the preamble can be used as a pilot for a subsequent data symbol on the time domain, and is used for channel estimation and detection of a data symbol on a sub-band occupied by the preamble; in bandwidth not occupied by the preamble, a DMRS needs to be uniformly inserted, and the uniformly inserted DMRS is used for channel estimation and detection of a data symbol on the bandwidth not occupied by the preamble. However, this scheme has two problems: 1) in the scenario of the large number of terminals, probability of DMRS collisions increases, and the DMRS collisions will affect performance of channel estimation; 2) data collisions will affect performance of data transmission.

To improve transmission performance of the URAT, including improving the channel estimation performance to address the problem of pilot collisions and improving the data transmission performance to address the problem of data collisions, the present application provides a communication method and apparatus, a device, and a storage medium. A preamble of data to be transmitted and a data symbol of the data to be transmitted occupy a same sub-band and a same sub-segment, and the preamble is used as a pilot of the data symbol for data estimation, which mitigates and even solves the problem of DMRS collisions. By dividing a time-frequency resource into multiple sub-bands and multiple sub-segments, a data symbol on a random resource position can be transmitted during uplink data transmission, which mitigates the problem of data collisions. Thus, the problems of pilot collisions and data collisions are effectively mitigated, the problem of performance degradation caused by pilot collisions is solved, the accuracy of channel estimation is improved, the problem of performance degradation caused by data collisions of multiple terminals is solved, and the initial access and data transmission of the large number of terminals are supported.

Herein, a pilot collision refers to sending different terminals' pilots on a same time-frequency resource, and a data collision refers to sending different terminals' data symbols on a same time-frequency resource.

Herein, the method and the apparatus are based on a same application concept. Since problem solving principles of the method and the apparatus are similar, implementations of the apparatus and the method can be mutually referred to, and repetitive descriptions are omitted.

Based on the above-mentioned technical concept, an application scenario of an embodiment of the present application is as follows:

FIG. 6 is an example diagram of an application scenario provided by an embodiment of the present application. As shown in FIG. 6, the application scenario involved in this embodiment may include a network device 601 and multiple terminals 602 (two terminals are taken as an example in FIG. 6). The network device 601 and the terminals 602 may communicate with each other. The terminals 602 may send data to the network device 601 through a frequency domain resource and a time domain resource. The frequency domain resource includes multiple sub-bands, and the time domain resource includes multiple sub-segments. Different terminals may try to transmit data through different sub-bands and different sub-segments as much as possible. For each terminal, a preamble of data to be transmitted and a data symbol of the data to be transmitted may occupy a same sub-band and a same sub-segment, so that the preamble can be used for channel estimation of the data symbol without the need to insert a DRMS, thereby mitigating the problem of pilot collisions and data collisions.

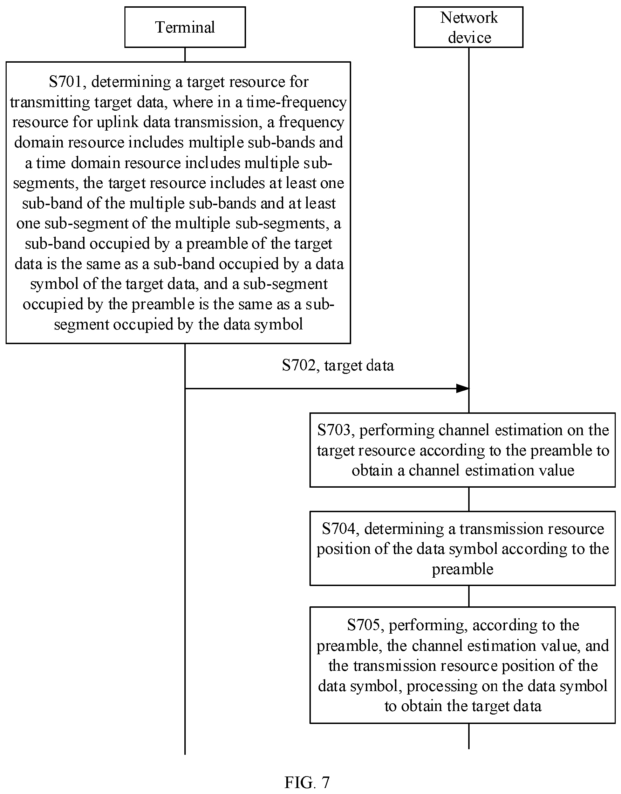

Referring to FIG. 7 to FIG. 10, combined with the application scenario in FIG. 6, the communication method and apparatus, and the storage medium provided by the embodiments of the present application are described. It should be noted that the above-mentioned application scenario is shown only for facilitating the understanding of the spirit and principle of the present application, and the embodiments of the present application may also be applied to any applicable scenarios.

FIG. 7 is a first schematic flowchart of a communication method provided by an embodiment of the present application. As shown in FIG. 7, the communication method of the embodiment may include:
S701, a terminal determines a target resource for transmitting target data, where in a time-frequency resource for uplink data transmission, a frequency domain resource includes multiple sub-bands and a time domain resource includes multiple sub-segments, the target resource includes at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol.

The terminal sends data to a network device through the frequency domain resource and the time domain resource. The frequency domain resource includes the multiple sub-bands, and the time domain resource includes the multiple sub-segments. That is, the frequency domain resource used for the uplink data transmission includes the multiple sub-bands, and the time domain resource used for the uplink data transmission includes the multiple sub-segments.

In a case that the target resource is used for one transmission of the target data, the target resource may include one sub-band of the multiple sub-bands and one sub-segment of the multiple sub-segments. Considering that a data volume of the target data may be relatively large, the target resource may also include a plurality of sub-bands of the multiple sub-bands and/or a plurality of sub-segments of the multiple sub-segments; and in a case that the target resource is used for multiple transmissions of the target data, the target resource may include a plurality of sub-bands of the multiple sub-bands and/or a plurality of sub-segments of the multiple sub-segments.

The sub-band occupied by the preamble being the same as the sub-band occupied by the data symbol may include two situations: one situation is that the sub-band occupied by the preamble is completely the same as the sub-band occupied by the data symbol; and the other situation is that the sub-band of the preamble and the sub-band occupied by the data symbol belong to two sub-bands within a coherent bandwidth range. In these two situations, the first situation is a sub-set of the second situation.

The sub-segment occupied by the preamble being the same as the sub-segment occupied by the data symbol may include two situations: one situation is that the sub-segment occupied by the preamble is completely the same as the sub-segment occupied by the data symbol; and the other situation is that the sub-segment of the preamble and the sub-segment occupied by the data symbol belong to two sub-segments within a coherent time range. In these two situations, the first situation is a sub-set of the second situation.

In this embodiment, the terminal may determine the sub-band for transmitting the preamble of the target data, the sub-segment for transmitting the preamble of the target data, the sub-band for transmitting the data symbol of the target data, and the sub-segment for transmitting the preamble of the target data from the multiple sub-bands and the multiple sub-segments, to obtain the target resource. The target resource may be randomly determined, or may be determined according to identification information related to the terminal and/or identification information related to the target data, so that different terminals or different data can be transmitted using different sub-bands and different sub-segments as much as possible, thereby reducing data collisions and pilot collisions.

S702, the terminal sends the target data to the network device on the target resource.

In this embodiment, the terminal sends the preamble of the target data to the network device on the sub-band occupied by the preamble and the sub-segment occupied by the preamble, and sends the data symbol of the target data to the network device on the sub-band occupied by the data symbol and the sub-segment occupied by the data symbol. Thus, the terminal is enabled to send the target data to the network device on the target resource.

S703, after receiving the target data, the network device performs channel estimation on the target resource according to the preamble to obtain a channel estimation value.

In this embodiment, the network device receives the target data from the terminal, that is, receives the preamble and the data symbol of the target data. After receiving the preamble, since the preamble and the data symbol occupy the same sub-band and the same sub-segment, that is, a same time-frequency resource, the preamble can act as a pilot of the data symbol for the channel estimation of the target resource to obtain the channel estimation value.

S704, the network device determines a transmission resource position of the data symbol according to the preamble.

In this embodiment, since the preamble and the data symbol occupy the same sub-band and the same sub-segment, the network device can determine the sub-band and the sub-segment occupied by the data symbol according to the sub-band and the sub-segment occupied by the preamble, that is, obtain the transmission resource position of the data symbol.

S705, the network device performs, according to the preamble, the channel estimation value, and the transmission resource position of the data symbol, processing on the data symbol, to obtain the target data.

In this embodiment, the network device performs corresponding receiving processing on the data symbol located at the transmission resource position according to the preamble, the channel estimation value, and the transmission resource position of the data symbol, such as demodulation, interleaving, interpolation (insertion of 0), decoding and de-scrambling, to obtain the target data.

In the embodiment of the present application, the preamble of the target data and the data symbol of the target data occupy the same sub-band and sub-segment, so that the preamble can act as the pilot of the data symbol for data estimation without the need for additional insertion of a pilot and additional insertion of a DMRS, mitigating or even solving the problem of DMRS collisions; the time-frequency resource is divided into the multiple sub-bands and the multiple sub-segments, so that different terminals or different data can occupy different resource positions as much as possible, which mitigates the problem of data collisions. Thus, the problem of pilot collisions and data collisions is effectively mitigated, the problem of performance degradation caused by pilot collisions is solved, the accuracy of channel estimation is improved, the problem of performance degradation caused by data collisions of multiple terminals is solved, and the initial access and data transmission of the large number of terminals are supported.

Next, for the preamble of the target data and the data symbol of the target data occupying the same sub-segment, some possible implementations are provided. Following implementations may be combined arbitrarily.

In one possible implementation, in the same sub-segment, the preamble of the target data and the data symbol of the target data are time-division multiplexed (time-division multiplexing, TDM), that is, the preamble and the data symbol may occupy different time slices within the same sub-segment, so that both the preamble and the data symbol can be transmitted within the same sub-segment, thereby improving a utilization rate of a time resource.

In one possible implementation, based on the time-division multiplexing of the preamble and the data symbol, in the same sub-segment, there may be a time interval between the preamble of the target data and the data symbol of the target data, and/or a length of a time domain resource occupied by the data symbol of the target data is an integer multiple of a length of a time domain resource occupied by the preamble, to meet the need for occupying time-domain resources required by the target data.

Next, for the number of transmissions of the target data, some possible implementations are provided.

In one possible implementation, the number of the transmissions of the target data is one. In one transmission of the target data, the sub-band occupied by the preamble is the same as the sub-band occupied by the data symbol, and the sub-segment occupied by the preamble is the same as the sub-segment occupied by the data symbol.

In one possible implementation, the number of the transmissions of the target data is multiple. In each transmission of the target data, the sub-band occupied by the preamble is the same as the sub-band occupied by the data symbol, and the sub-segment occupied by the preamble is the same as the sub-segment occupied by the data symbol. Thus, in each transmission of the target data, the preamble of the target data can be used as a pilot of the data symbol for channel estimation.

Based on the number of the transmissions of the target data being one or multiple, different target data may try to adopt different numbers of transmissions to mitigate the problem of pilot collisions and data collisions in the uplink data transmission.

In one possible implementation, based on the number of the transmissions of the target data being multiple, the target resources may include: at least two sub-bands of the multiple sub-bands and at least one sub-segment of the multiple sub-segments; or, at least one sub-band of the multiple sub-bands and at least two sub-segments of the multiple sub-segments; or, at least two sub-bands of the multiple sub-bands and at least two sub-segments of the multiple sub-segments. Thus, at least two sub-bands and/or at least two sub-segments are combined to form a time-frequency resource for the multiple transmissions of the target data.

In one possible implementation, based on the number of the transmissions of the target data being multiple, the sub-band and the sub-segment in the target resource may form multiple target resources. In the multiple time-frequency resources, one time-frequency resource is used for one transmission of the target data, so as to achieve the multiple transmissions of the target resource through the multiple time-frequency resources. In one time-frequency resource, the sub-band occupied by the preamble is the same as the sub-band occupied by the data symbol, and the sub-segment occupied by the preamble is the same as the sub-segment occupied by the data symbol. Each time-frequency resource adopts same sub-carrier space to improve accuracy of channel estimation based on the preamble.

Further, one sub-band and one sub-segment can form one time-frequency resource.

In a case that the target resource includes at least two sub-bands and at least one sub-segment, at least two time-frequency resources can be formed, and the at least two time-frequency resources can be used for at least two transmissions of the target data; in a case that the target resource includes at least one sub-band and at least two sub-segments, at least two time-frequency resources can be formed, and can be used for at least two transmissions of the target data; and in a case that the target resource includes at least two sub-bands and at least two sub-segments, at least four time-frequency resources can be formed and used for at least four transmissions of the target data. Thus, the multiple transmissions of the target data can be achieved.

In one possible implementation, based on the number of the transmissions of the target data being multiple, in the multiple transmissions of the target data, a same data symbol of the target data may be repeatedly transmitted; or data symbols of different coded versions of the target data may be transmitted. For example, a data symbol of the second transmission of the target data is the same as a data symbol of the first transmission of the target data, that is, the same data symbol is repeatedly transmitted; and a data symbol of the third transmission of the target data and the data symbol of the second transmission of the target data are data symbols of different coded versions of the target data. Thus, by repeatedly transmitting the same data symbol or the data symbols of different coded versions, the multiple transmissions of the data symbol of the target data can be achieved.

In one possible implementation, based on the number of the transmissions of the target data being multiple, in the multiple transmissions of the target data, a same preamble of the target data is repeatedly transmitted; or, multiple preambles associated with the target data are transmitted, and there is a mapping relationship between the multiple preambles. The multiple preambles associated with the target data are different preambles. Since these multiple preambles have the mapping relationship, the multiple preambles can be determined to be preambles of same data based on the mapping relationship. Thus, by repeatedly transmitting the same preamble or the multiple different preambles with the mapping relationship, the multiple transmissions of the preamble of the target data can be achieved.

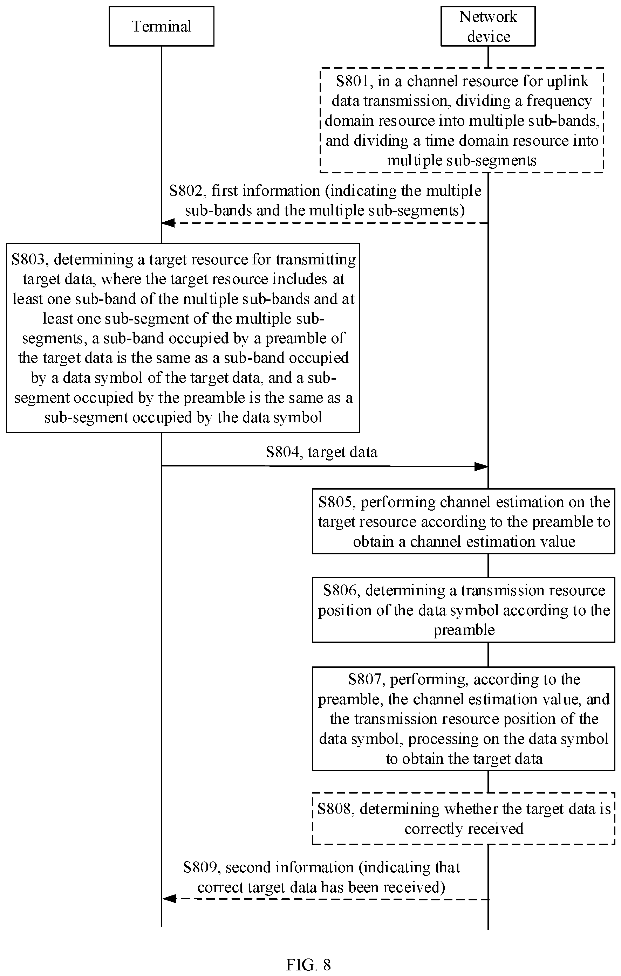

FIG. 8 is a second schematic flowchart of a communication method provided by an embodiment of the present application. As shown in FIG. 8, the communication method of the embodiment may include:
S801, in a channel resource for uplink data transmission, a network device divides a frequency domain resource into multiple sub-bands, and divides a time domain resource into multiple sub-segments.

S802, the network device sends first information to a terminal, where the first information indicates the multiple sub-bands contained in the frequency domain resource and the multiple sub-segments contained in the time domain resources.

S801 and S802 are optional steps. For example, the multiple sub-bands contained in the frequency domain resource and the multiple sub-segments contained in the time domain resource may be pre-configured, and the terminal can know the multiple sub-bands and the multiple sub-segments based on configuration information. The first information may specifically indicate resource information respectively corresponding to the multiple sub-bands and resource information respectively corresponding to the multiple sub-segments. The resource information may include a resource position and a resource size, so that the terminal can accurately determine a target resource according to this information when determining the target resource.

S803, the terminal determines the target resource for transmitting target data, where the target resource includes at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol.

An implementation principle and a technical effect of S803 may refer to the aforementioned embodiments, and will not be repeated.

In one possible implementation, S803 may include that: the terminal determines metadata bits of the target data; determines the number of transmissions of the target data according to the metadata bits; determines a transmission resource position of the target data according to the metadata bits; and allocates, according to the number of the transmissions and the transmission resource position, the at least one sub-band of the multiple sub-bands and the at least one sub-segment of the multiple sub-segments to the target data to obtain the target resource. Since the metadata bits are equivalent to user identity information (which may refer to the aforementioned description of URAT), different data are likely to correspond to different metadata bits. By determining the number of transmissions and a transmission resource position of data based on metadata bits, different numbers of transmissions and different transmission resource positions can be determined for different data, mitigating the problem of pilot collisions and data collisions in uplink transmission of different data.

In this embodiment, the terminal may determine information bits of the target data, generate the metadata bits of the target data based on the information bits of the target data, and generate the preamble of the target data based on the metadata bits, where a format of the preamble may refer to the description of the preamble formats in the aforementioned technologies related to the scenario of the large number of terminals, and will not be repeated. According to a mapping relationship between multiple metadata bits and multiple numbers of transmissions, the number of the transmissions of the target data may be determined as the number of transmissions corresponding to the metadata bits of the target data; and according to a mapping relationship between the multiple metadata bits and multiple transmission resource positions, the transmission resource position of the target data may be determined as the transmission resource position corresponding to the metadata bits of the target data. The transmission resource position of the target data includes a resource position corresponding to each transmission of the target data, and based on the number of the transmissions and the resource position corresponding to each transmission, the at least one sub-band of the multiple sub-bands and the at least one sub-segment of the multiple sub-segments are allocated to the target data to obtain the target resource, that is, to obtain the sub-band occupied by the preamble, the sub-segment occupied by the preamble, the sub-band occupied by the data symbol, and the sub-segment occupied by the data symbol in each transmission.

In addition to the above method, the resource position may also be determined randomly.

S804, the terminal sends the target data to the network device on the target resource.

S805, after receiving the target data, the network device performs, according to the preamble, channel estimation on the target resource to obtain a channel estimation value.

Implementation principles and technical effects of S803 to S805 may refer to the aforementioned embodiments, and will not be repeated.

In one possible implementation, based on the number of the transmissions of the target data being multiple, S805 may include that: the network device performs channel estimation respectively based on each preamble among a same preamble transmitted repeatedly or multiple associated preambles, to obtain a channel estimation value respectively corresponding to each preamble, where the channel estimation value corresponding to the preamble includes a channel estimation value of a sub-band and a sub-segment where the preamble is located.

In this implementation, in a case that the number of the transmissions of the target data is multiple, when the network device performs sequence detection on the received target data, multiple preambles may be detected. Considering that in the multiple transmissions of the target data, the same preamble may be repeatedly transmitted or the multiple preambles associated with the target data may be transmitted, the detected multiple preambles may be same preambles or the multiple preambles associated with the target data, where the multiple preambles have a mapping relationship. Regardless of which situation it is, sub-bands or sub-segments occupied by different numbers of transmissions are different, so channel estimation may be respectively performed on each preamble to obtain the channel estimation value corresponding to each preamble. For each preamble, the channel estimation value corresponding to the preamble is a channel estimation value of a sub-band and a sub-segment occupied by the preamble, and is also a channel estimation value corresponding to a data symbol occupying the same sub-band and the same sub-segment as the preamble, and this channel estimation value can be used for data processing of the data symbol.

S806, the network device determines a transmission resource position of the data symbol according to the preamble.

An implementation principle and a technical effect of S806 may refer to the aforementioned embodiments, and will not be repeated.

In one possible implementation, S806 may include: determining the metadata bits of the target data according to the preamble of the target data; and determining the transmission resource position of the data symbol according to the metadata bits. Thus, by using the metadata bits, accuracy of determining the transmission resource position of the data symbol can be improved.

In this implementation, since the preamble of the target data is generated by the terminal based on the metadata bits of the target data, the network device can determine the metadata bits of the target data based on the preamble of the target data. Then, in the mapping relationship between the multiple metadata bits and the multiple transmission resource positions, the transmission resource position of the data symbol is determined as a transmission resource position corresponding to the metadata bits of the target data.

S807, the network device performs, according to the preamble, the channel estimation value, and the transmission resource position of the data symbol, processing on the data symbol to obtain the target data.

An implementation principle and a technical effect of S807 may refer to the aforementioned embodiments, and will not be repeated.

In one possible implementation, S807 may include that: the network device performs, according to the metadata bits, the channel estimation value, and the transmission resource position of the data symbol, processing on the data symbol to obtain the information bits of the target data. The information bits may refer to the aforementioned embodiments, and will not be repeated here. The information bits of the target data represent information content of the target data, and obtaining the information bits is equivalent to obtaining the target data.

In one possible implementation, in the case that the number of the transmissions of the target data are multiple, for each preamble, the network device performs, according to the metadata bits of the target data, the channel estimation value corresponding to the preamble, and the transmission resource position of the data symbol, processing on the data symbol to obtain information bits of the target data for each transmission, so as to achieve data reception during multiple transmissions of the target data.

S808, the network device determines whether the target data is correctly received.

If the target data is correct, S809 is performed, otherwise S810 is performed.

In one possible implementation, the network device may determine whether the information bits are correct. If the information bits are correct, it is determined that the target data is correctly received. Thus, based on determination of the information bits, accuracy of determining whether the target data has been correctly received is improved. In the case that the number of the transmissions of the target data is multiple, if information bits are correct in one transmission, then S809 can be performed; otherwise, S810 is performed.

In one possible implementation, in a case that the information bits are determined to be correct, a data symbol corresponding to the information bits may be used in an interference cancellation algorithm at a receiving end to solve or mitigate the problem of data collisions.

S809, sending second information to the terminal, where the second information indicates that correct target data has been received.

S808 to S809 are optional steps.

In this embodiment, if the terminal does not receive the second information within a certain period of time or receives third information indicating that the correct target data has not been received, a new round of transmission of the target data will be carried out.

In the embodiment of the present application, the network device may divide a time-frequency resource into multiple sub-bands and multiple sub-segments and inform the terminal. The terminal determines at least one sub-band and one sub-segment as the target resource for transmitting the target data. In the target resource, the preamble of the target data and the data symbol of the target data occupy the same sub-band and sub-segment, so that the preamble can be used as a pilot of the data symbol for data estimation, without the need for additional insertion of a pilot and additional insertion of a DMRS, which mitigates or even solves the problem of DMRS collisions; and the target resource is determined based on the metadata bits, so that different terminals or different data can occupy different resource positions as much as possible, which mitigates the problem of data collisions.

The following provides several examples to describe one transmission and multiple transmissions of the target data.

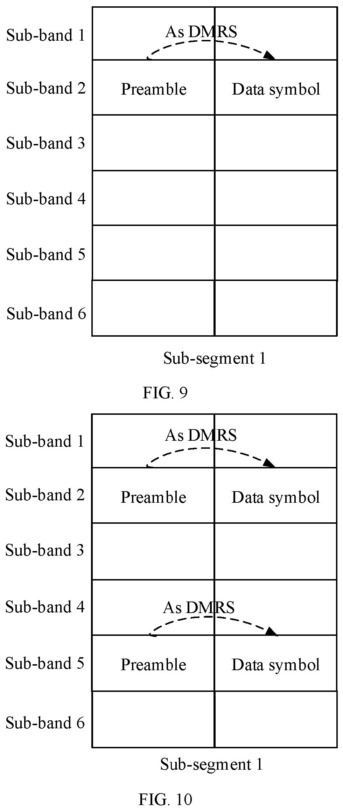

FIG. 9 is an example diagram of data transmission on a single sub-band and a single sub-segment provided by an embodiment of the present application. As shown in FIG. 9, a preamble and a data symbol of target data occupy a same sub-band: sub-band 2; and the preamble and the data symbol of the target data occupy a same sub-segment: sub-segment 1. On the sub-segment 1, the preamble and the data symbol are time-division multiplexed, the preamble is located before the data symbol, and the preamble and the data symbol are transmitted once respectively, that is, the target data is transmitted once.

A process on a terminal side may include:
Step 1, a terminal receives dividing signaling of a resource (i.e., the first information in the aforementioned embodiment) from a network side. This dividing signaling may indicate information such as positions and sizes of N (N ≥ 1) sub-bands and M (N ≥ 1) sub-segments, where one sub-band and one sub-segment can form one transmission resource, that is, form a time-frequency resource used for one data transmission, and sub-carrier space on the one transmission resource is the same.

Step 2, the terminal generates metadata bits according to information bits of the target data to be transmitted, and generates the preamble according to the metadata bits. According to the metadata bits, the number of transmissions of the target data is determined to be one, and the sub-band 2 and the sub-segment 1 are determined to be a transmission resource position. During transmission of the target data, the preamble serves as a DMRS of the data symbol, and no dedicated DMRS needs to be sent.

Step 3: the terminal performs sending processing on the information bits according to the metadata bits, including scrambling, coding, rate matching, interleaving, modulation, precoding, etc., to generate the data symbol.

Step 4: the terminal maps the preamble and the data symbol to the sub-band 2 and the sub-segment 1 according to the metadata bits, where the preamble is before the data symbol on the time domain, and uplink transmission is performed with the preamble and the data symbol occupying same bandwidth and using same sub-carrier space.

Step 5: after the uplink transmission is completed, the terminal monitors feedback information (i.e., the second information in the aforementioned embodiment) from the network device. When the feedback information indicates that the target data has been correctly received, the data transmission stops; otherwise, a new round of target data transmission starts.

A process on a network device side may include:
Step 1, the network device sends the dividing signaling about resource division, and the dividing signaling indicates the information such as the positions and the sizes of the N (N ≥ 1) sub-bands and the M (N ≥ 1) sub-segments, where one sub-band and one sub-segment can form one transmission resource, that is, form a time-frequency resource used for one data transmission, and sub-carrier space on the one transmission resource is the same.

Step 2, the network device receives a preamble and a data symbol sent by the terminal, performs sequence correlation detection on the preamble, and performs channel estimation using a detection result of the preamble (an actual transmitted signal of the terminal) and the received preamble (an actual received signal of the network device), to obtain a channel estimation value for a corresponding sub-band and sub-segment position.

Step 3, the network device obtains the metadata bits according to the detection result of the preamble, and obtains the resource position of the sub-band 2 and the sub-segment 1 for the current transmission of the target data based on a mapping relationship between the metadata bits and the resource position, to obtain a resource position of the data symbol.

Step 4, the network device performs corresponding receiving processing on the data symbol according to the obtained metadata bits, the channel estimation value, and the resource position of the data symbol, to obtain information bits of the target data, where the receiving processing includes demodulation, de-interleaving, zero insertion, decoding, and de-scrambling, etc.

Step 5, the network device sends the feedback information to the terminal according to whether the information bits are correct.

FIG. 10 is an example diagram of data transmission on two sub-bands and a single sub-segment provided by an embodiment of the present application. As shown in FIG. 10, preambles and data symbols of target data occupy same sub-bands: sub-band 2 and sub-band 5; and the preambles and the data symbols of the target data occupy a same sub-segment: sub-segment 1. On the sub-segment 1, the preambles and the data symbols are time-division multiplexed, the preambles are before the data symbols, and the preambles and the data symbols are transmitted once respectively.

A process on a terminal side may include:
Step 1, a terminal receives dividing signaling of a resource (i.e., the first information in the aforementioned embodiment) from a network side. This dividing signaling may indicate information such as positions and sizes of N (N ≥ 1) sub-bands and M (N ≥ 1) sub-segments, where one sub-band and one sub-segment can form one transmission resource, that is, form a time-frequency resource used for one data transmission, and sub-carrier space on the one transmission resource is the same.

Step 2, the terminal generates metadata bits according to information bits of the target data to be transmitted, and generates the preambles according to the metadata bits. According to the metadata bits, the number of transmissions of the target data is determined to be two, and the sub-band 2, the sub-band 5, and the sub-segment 1 are determined to be transmission resource positions. During two transmissions of the target data, the preambles serve as DMRSs of the data symbols, and no dedicated DMRS needs to be sent. During the two transmissions of the target data, the sub-band 2 and the sub-segment 1 are used for one transmission, and the sub-band 5 and the sub-segment 1 are used for the other transmission. The preambles in the two transmissions may be same preambles or equivalent preambles (i.e., two preambles with an association relationship), and the data symbols in the two transmissions may be same data symbols or data symbols of different coded versions.

Step 3: the terminal performs sending processing on the information bits according to the metadata bits, including scrambling, coding, rate matching, interleaving, modulation, precoding, etc., to generate the data symbols.

Step 4: according to the metadata bits, the terminal maps the preambles to the sub-band 2 and the sub-segment 1 as well as the sub-band 5 and the sub-segment 1, and maps the data symbols to the sub-band 2 and the sub-segment 1 as well as the sub-band 5 and the sub-segment 1. On the same sub-segment, the preambles are before the data symbols, and uplink transmission is performed with a preamble and a data symbol occupying same bandwidth and using same sub-carrier space on a same sub-band.

Step 5: after the uplink transmission is completed, the terminal monitors feedback information (i.e., the second information in the aforementioned embodiment) from the network device. When the feedback information indicates that the target data has been correctly received, the data transmission stops; otherwise, a new round of target data transmission starts.

A process on a network device side may include:
Step 1, the network device sends the dividing signaling about resource division, and the dividing signaling indicates the information such as the positions and the sizes of the N (N ≥ 1) sub-bands and the M (N ≥ 1) sub-segments, where one sub-band and one sub-segment can form one transmission resource, that is, form a time-frequency resource used for one data transmission, and sub-carrier space on the one transmission resource is the same.

Step 2, the network device receives preambles and data symbols sent by the terminal, performs sequence correlation detection on the preambles, and finds that two same preambles or two preambles with an association relationship are detected on the sub-band 2 and the sub-band 5. For each preamble, channel estimation is performed using a detection result of the preamble (an actual transmitted signal of the terminal) and a received preamble (an actual received signal of the network device), to obtain channel estimation values on the sub-band 2, the sub-band 5, and the sub-segment 1.

Step 3, the network device obtains the metadata bits according to detection results of the preambles, and obtains the resource positions of the sub-band 2, the sub-band 5, and the sub-segment 1 for the current transmission of the target data based on a mapping relationship between the metadata bits and the resource positions, that is, resource positions of the data symbols are obtained.

Step 4, the network device performs corresponding receiving processing on the data symbols according to the obtained metadata bits, the channel estimation values, and the resource positions of the data symbols, to obtain information bits of the target data, where the receiving processing includes demodulation, de-interleaving, zero insertion, decoding, and de-scrambling, etc.

Step 5, the network device sends the feedback information to the terminal according to whether the information bits are correct. Meanwhile, a data symbol corresponding to correct information bits may be used in an interference cancellation algorithm on the network device side.

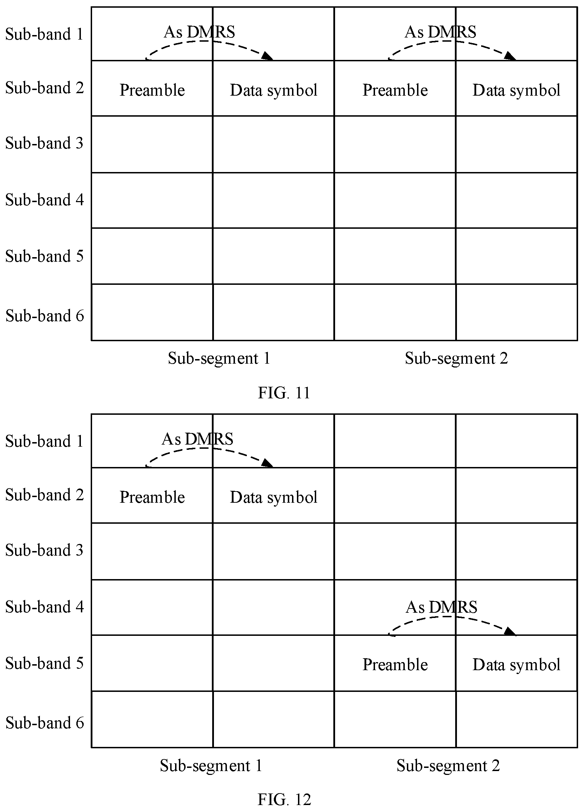

FIG. 11 is an example diagram of data transmission on a single sub-band and two sub-segments provided by an embodiment of the present application. As shown in FIG. 11, preambles and data symbols of target data occupy a same sub-band: sub-band 2; and the preambles and the data symbols of the target data occupy same sub-segments: sub-segment 1 and sub-segment 2. On the sub-segment 1 or the sub-segment 2, a preamble and a data symbol are time-division multiplexed, the preamble is before the data symbol, and the preamble and the data symbol on each sub-segment are transmitted once respectively.

A process on a terminal side may include:
Step 1, a terminal receives dividing signaling of a resource (i.e., the first information in the aforementioned embodiment) from a network side. This dividing signaling may indicate information such as positions and sizes of N (N ≥ 1) sub-bands and M (N ≥ 1) sub-segments, where one sub-band and one sub-segment can form one transmission resource, that is, form a time-frequency resource used for one data transmission, and sub-carrier space on the one transmission resource is the same.

Step 2, the terminal generates metadata bits according to information bits of the target data to be transmitted, and generates the preambles according to the metadata bits. According to the metadata bits, the number of transmissions of the target data is determine to be two, and the sub-band 2, the sub-segment 1, and the sub-segment 2 are determined to be transmission resource positions. During two transmissions of the target data, the preambles serve as DMRSs of the data symbols, and no dedicated DMRS needs to be sent. During the two transmissions of the target data, the sub-band 2 and the sub-segment 1 are used for one transmission, and the sub-band 2 and the sub-segment 2 are used for the other transmission. The preambles in the two transmissions may be same preambles or equivalent preambles (i.e., two preambles with an association relationship), and the data symbols in the two transmissions may be same data symbols or data symbols of different coded versions.

Step 3: the terminal performs sending processing on the information bits according to the metadata bits, including scrambling, coding, rate matching, interleaving, modulation, precoding, etc., to generate the data symbols.

Step 4: according to the metadata bits, the terminal maps the preambles to the sub-band 2 and the sub-segment 1 as well as the sub-band 2 and the sub-segment 2, and maps the data symbols to the sub-band 2 and the sub-segment 1 as well as the sub-band 2 and the sub-segment 2. On a same sub-segment, a preamble is before a data symbol, and uplink transmission is performed with the preamble and the data symbol occupying same bandwidth and using same sub-carrier space on the same sub-band.

Step 5: after the uplink transmission is completed, the terminal monitors feedback information (i.e., the second information in the aforementioned embodiment) from a network device. When the feedback information indicates that the target data has been correctly received, the data transmission stops; otherwise, a new round of target data transmission starts.

A process on a network device side may include:
Step 1, the network device sends the dividing signaling about resource division, and the dividing signaling indicates the information such as the positions and the sizes of the N (N ≥ 1) sub-bands and the M (N ≥ 1) sub-segments, where one sub-band and one sub-segment can form one transmission resource, that is, form a time-frequency resource used for one data transmission, and sub-carrier space on the one transmission resource is the same.

Step 2, the network device receives preambles and data symbols sent by the terminal, performs sequence correlation detection on the preambles, and finds that two same preambles or two preambles with an association relationship are detected on the sub-band 2 and the sub-segment 1 as well as the sub-band 2 and the sub-segment 2. For each preamble, channel estimation is performed using a detection result of the preamble (an actual transmitted signal of the terminal) and a received preamble (an actual received signal of the network device), to obtain a channel estimation value on the sub-band 2 and the sub-segment 1 and a channel estimation value on the sub-band 2 and the sub-segment 2.

Step 3, the network device obtains the metadata bits according to detection results of the preambles, and obtains the resource positions of the sub-band 2, the sub-segment 1, and the sub-segment 2 for the current transmission of the target data based on a mapping relationship between the metadata bits and the resource positions, that is, resource positions of the data symbols are obtained.

Step 4, the network device performs corresponding receiving processing on the data symbols according to the obtained metadata bits, the channel estimation values, and the resource positions of the data symbols, to obtain information bits of the target data, where the receiving processing includes demodulation, de-interleaving, zero insertion, decoding, and de-scrambling, etc.

Step 5, the network device sends the feedback information to the terminal according to whether the information bits are correct. Meanwhile, a data symbol corresponding to correct information bits may be used in an interference cancellation algorithm on the network device side.

FIG. 12 is a first example diagram of data transmission on two sub-bands and two sub-segments provided by an embodiment of the present application. As shown in FIG. 12, preambles and data symbols of target data occupy same sub-bands: sub-band 2 and sub-band 5; and the preambles and the data symbols of the target data occupy same sub-segments: sub-segment 1 and sub-segment 2. On the sub-segment 1 or the sub-segment 2, a preamble and a data symbol are time-division multiplexed, the preamble is before the data symbol, and the preamble and the data symbol on each sub-segment are transmitted once respectively.

A process on a terminal side may include:
Step 1, a terminal receives dividing signaling of a resource (i.e., the first information in the aforementioned embodiment) from a network side. This dividing signaling may indicate information such as positions and sizes of N (N ≥ 1) sub-bands and M (N ≥ 1) sub-segments, where one sub-band and one sub-segment can form one transmission resource, that is, form a time-frequency resource used for one data transmission, and sub-carrier space on the one transmission resource is the same.

Step 2, the terminal generates metadata bits according to information bits of the target data to be transmitted, and generates preambles according to the metadata bits. According to the metadata bits, the number of transmissions of the target data is determined to be two, and the sub-band 2, the sub-band 5, the sub-segment 1, and the sub-segment 2 are determined to be transmission resource positions. During two transmissions of the target data, the preambles serve as DMRSs of the data symbols, and no dedicated DMRS needs to be sent. During the two transmissions of the target data, the sub-band 2 and the sub-segment 1 are used for one transmission, and the sub-band 5 and the sub-segment 2 are used for the other transmission. The preambles in the two transmissions may be same preambles or equivalent preambles (i.e., two preambles with an association relationship), and the data symbols in the two transmissions may be same data symbols or data symbols of different coded versions.

Step 3: the terminal performs sending processing on the information bits according to the metadata bits, including scrambling, coding, rate matching, interleaving, modulation, precoding, etc., to generate the data symbols.

Step 4: according to metadata bits, the terminal maps the preambles to the sub-band 2 and the sub-segment 1 as well as the sub-band 5 and the sub-segment 2, and maps the data symbols to the sub-band 2 and the sub-segment 1 as well as the sub-band 5 and the sub-segment 2. On a same sub-segment, a preamble is before a data symbol, and uplink transmission is performed with a preamble and a data symbol occupying same bandwidth and using same sub-carrier space on a same sub-band.

Step 5: after the uplink transmission is completed, the terminal monitors feedback information (i.e., the second information in the aforementioned embodiment) from the network device. When the feedback information indicates that the target data has been correctly received, the data transmission stops; otherwise, a new round of target data transmission starts.

A process on a network device side may include:
Step 1, the network device sends the dividing signaling about resource division, and the dividing signaling indicates the information such as the positions and the sizes of the N (N ≥ 1) sub-bands and the M (N ≥ 1) sub-segments, where one sub-band and one sub-segment can form one transmission resource, that is, form a time-frequency resource used for one data transmission, and sub-carrier space on the one transmission resource is the same.

Step 2, the network device receives preambles and data symbols sent by the terminal, performs sequence correlation detection on the preambles, and finds that two same preambles or two preambles with an association relationship are detected on the sub-band 2 and the sub-segment 1 as well as the sub-band 5 and the sub-segment 2. For each preamble, channel estimation is performed using a detection result of the preamble (an actual transmitted signal of the terminal) and a received preamble (an actual received signal of the network device), to obtain a channel estimation value on the sub-band 2 and the sub-segment 1 and a channel estimation value on the sub-band 5 and the sub-segment 2.

Step 3, the network device obtains the metadata bits according to detection results of the preambles, and obtains the resource positions of the sub-band 2 and the sub-segment 1 as well as the sub-band 5 and the sub-segment 2 for the current transmission of the target data based on a mapping relationship between the metadata bits and the resource positions, that is, resource positions of the data symbols are obtained.

Step 4, the network device performs corresponding receiving processing on the data symbols according to the obtained metadata bits, the channel estimation values, and the resource positions of the data symbols, to obtain information bits of the target data, where the receiving processing includes demodulation, de-interleaving, zero insertion, decoding, and de-scrambling, etc.

Step 5, the network device sends the feedback information to the terminal according to whether the information bits are correct. Meanwhile, a data symbol corresponding to correct information bits may be used in an interference cancellation algorithm on the network device side.

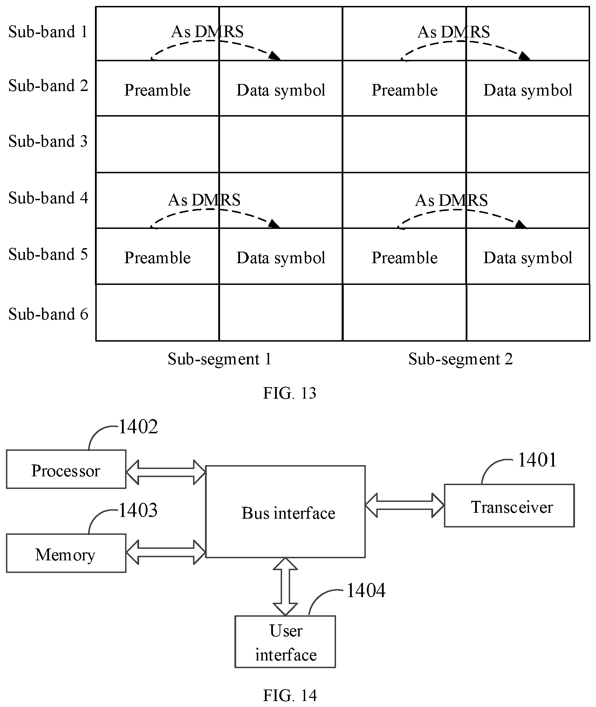

FIG. 13 is a second example diagram of data transmission on two sub-bands and two sub-segments provided by an embodiment of the present application. As shown in FIG. 13, preambles and data symbols of target data occupy same sub-bands: sub-band 2 and sub-band 5; and the preambles and the data symbols of the target data occupy same sub-segments: sub-segment 1 and sub-segment 2. On the sub-segment 1 or the sub-segment 2, preambles and data symbols are time-division multiplexed, the preambles are before the data symbols, and the preambles and the data symbols on each sub-segment are transmitted once respectively.

A process on a terminal side may include:
Step 1, a terminal receives dividing signaling of a resource (i.e., the first information in the aforementioned embodiment) from a network side. This dividing signaling may indicate information such as positions and sizes of N (N ≥ 1) sub-bands and M (N ≥ 1) sub-segments, where one sub-band and one sub-segment can form one transmission resource, that is, form a time-frequency resource used for one data transmission, and sub-carrier space on the one transmission resource is the same.

Step 2, the terminal generates metadata bits according to information bits of target data to be transmitted, and generates preambles according to the metadata bits. According to the metadata bits, the number of transmissions of the target data is determined to be four, and the sub-band 2, the sub-band 5, the sub-segment 1, and the sub-segment 2 are determined to be transmission resource positions. During four transmissions of the target data, the preambles serve as DMRSs of the data symbols, and no dedicated DMRS needs to be sent. During the four transmissions of the target data, the sub-band 2 and the sub-segment 1 are used for one transmission, the sub-band 2 and the sub-segment 2 are used for one transmission, the sub-band 5 and the sub-segment 1 are used for one transmission, and the sub-band 5 and the sub-segment 2 are used for one transmission. The preambles in the four transmissions may be same preambles or equivalent preambles (that is, at least two preambles with an association relationship), and the data symbols in the four transmissions may be same data symbols or data symbols of different coded versions.

Step 3: the terminal performs sending processing on the information bits according to the metadata bits, including scrambling, coding, rate matching, interleaving, modulation, precoding, etc., to generate the data symbols.

Step 4: according to the metadata bits, the terminal maps the preambles to the sub-band 2 and the sub-segment 1, the sub-band 2 and the sub-segment 2, the sub-band 5 and the sub-segment 1, and the sub-band 5 and the sub-segment 2, and maps the data symbols to the sub-band 2 and the sub-segment 1, the sub-band 2 and the sub-segment 2, the sub-band 5 and the sub-segment 1, and the sub-band 5 and the sub-segment 2. On a same sub-segment, a preamble is before a data symbol, and uplink transmission is performed with a preamble and a data symbol occupying same bandwidth and using same sub-carrier space on a same sub-band.

Step 5: after the uplink transmission is completed, the terminal monitors feedback information (i.e., the second information in the aforementioned embodiment) from a network device. When the feedback information indicates that the target data has been correctly received, the data transmission stops; otherwise, a new round of target data transmission starts.

A process on a network device side may include:
Step 1, the network device sends the dividing signaling about resource division, and the dividing signaling indicates the information such as the positions and the sizes of the N (N ≥ 1) sub-bands and the M (N ≥ 1) sub-segments, where one sub-band and one sub-segment can form one transmission resource, that is, form a time-frequency resource used for one data transmission, and sub-carrier space on the one transmission resource is the same.

Step 2, the network device receives preambles and data symbols sent by the terminal, performs sequence correlation detection on the preambles, and finds that two same preambles or two preambles with an association relationship are detected on the sub-band 2 and the sub-segment 1, the sub-band 2 and the sub-segment 2, the sub-band 5 and the sub-segment 1, and the sub-band 5 and the sub-segment 2. For each preamble, channel estimation is performed using a detection result of the preamble (an actual transmitted signal of the terminal) and a received preamble (an actual received signal of the network device), to obtain a channel estimation value on the sub-band 2 and the sub-segment 1, a channel estimation value on the sub-band 2 and the sub-segment 2, a channel estimation value on the sub-band 5 and the sub-segment 1, and a channel estimation value on the sub-band 5 and the sub-segment 2.

Step 3, the network device obtains the metadata bits according to detection results of the preambles, and obtains the resource positions of the sub-band 2 and the sub-segment 1, the sub-band 2 and the sub-segment 2, the sub-band 5 and the sub-segment 1, and the sub-band 5 and the sub-segment 2 for the current transmission of the target data based on a mapping relationship between the metadata bits and the resource positions, that is, resource positions of the data symbols are obtained.

Step 4, the network device performs corresponding receiving processing on the data symbols according to the obtained metadata bits, the channel estimation values, and the resource positions of the data symbols, to obtain information bits of the target data, where the receiving processing includes demodulation, de-interleaving, zero insertion, decoding, and de-scrambling, etc.

Step 5, the network device sends the feedback information to the terminal according to whether the information bits are correct. Meanwhile, a data symbol corresponding to correct information bits may be used in an interference cancellation algorithm on the network device side.

On a terminal side, an embodiment of the present application provides a communication apparatus. The terminal sends data to a network device through a frequency domain resource and a time domain resource. The frequency domain resource includes multiple sub-bands, and the time domain resource includes multiple sub-segments. As shown in FIG. 14, the communication apparatus may include a transceiver 1401, a processor 1402, and a memory 1403.

The transceiver 1401 is configured to receive and send data under control of the processor 1402.

In FIG. 14, a bus architecture may include any number of interconnected buses and bridges, through which various circuits, specifically one or more processors represented by the processor 1402 and a memory represented by the memory 1403, are linked together. The bus architecture may further link together various other circuits such as a peripheral device, a regulator, and a power management circuit, etc., which are well known in the art and therefore will not be further described herein. A bus interface provides an interface. The transceiver 1401 may be multiple components, i.e., including a transmitter and a receiver, providing units for communicating with various other apparatus on transmission media, these transmission media including, these transmission media including a wireless channel, a wired channel, a fiber optic cable, and other transmission media. Optionally, the communication apparatus further includes a user interface 1404. The user interface 1404 may be an interface that can be externally or internally connected to a required device for different user devices, and a connected device includes but is not limited to a small keyboard, a display, a speaker, a microphone, a joystick, etc.

The processor 1402 is responsible for managing the bus architecture and general processing, and the memory 1403 may store data used by the processor 1402 when performing operations.

Optionally, the processor 1402 may be a central processing unit (central processing unit, CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD). The processor 1402 may also adopt a multi-core architecture.

The processor 1402, by invoking a computer program stored in the memory 1403, is configured to execute, according to an obtained executable instruction, any one of the methods related to a first terminal provided by the embodiments of the present application. The processor and the memory may also be physically arranged separately.

Specifically, the processor 1402 is configured to perform following operations: determining a target resource for transmitting target data, where in a time-frequency resource for uplink data transmission, a frequency domain resource includes multiple sub-bands and a time domain resource includes multiple sub-segments, the target resource includes at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol; and sending the target data to a network device on the target resource

In one possible implementation, in the same sub-segment, the preamble and the data symbol are time-division multiplexed.

In one possible implementation, in the same sub-segment, there is a time interval between the preamble and the data symbol, and/or, a length of a time domain resource occupied by the data symbol is an integer multiple of a length of a time domain resource occupied by the preamble.

In one possible implementation, the number of transmissions of the target data is multiple, in each transmission of the target data, the sub-band occupied by the preamble is the same as the sub-band occupied by the data symbol, and the sub-segment occupied by the preamble is the same as the sub-segment occupied by the data symbol.

In one possible implementation, the target resource includes: at least two sub-bands and at least one sub-segment; or, at least one sub-band of the multiple sub-bands and at least two sub-segments of the multiple sub-segments; or, at least two sub-bands of the multiple sub-bands and at least two sub-segments of the multiple sub-segments.

In one possible implementation, the sub-band and the sub-segment of the target resource form multiple time-frequency resources, in the multiple time-frequency resources, one time-frequency resource is used for one transmission of the target data, and each of the time-frequency resources adopts same sub-carrier space.

In one possible implementation, in the multiple transmissions of the target data, a same data symbol of the target data is repeatedly transmitted; or, data symbols of different coded versions of the target data are transmitted.

In one possible implementation, in the multiple transmissions of the target data, a same preamble of the target data is repeatedly transmitted; or, multiple preambles associated with the target data are transmitted, and there is a mapping relationship between the multiple preambles.

In one possible implementation, the processor 1402 is further configured to perform following operations: determining metadata bits of the target data; determining the number of transmissions of the target data according to the metadata bits; determining a transmission resource position of the target data according to the metadata bits; and allocating, according to the number of the transmissions and the transmission resource position, the at least one sub-band of the multiple sub-bands and the at least one sub-segment of the multiple sub-segments to the target data to obtain the target resource.

In one possible implementation, the processor 1402 is further configured to perform following operations: receiving first information from the network device, where the first information indicates the multiple sub-bands and the multiple sub-segments.

It should be noted that the above-mentioned apparatus provided by the present application can implement all the method steps of the terminal in the above-mentioned method embodiments, and can achieve a same technical effect, and same parts of this embodiment as the method embodiments and beneficial effects will not be specifically repeated herein.

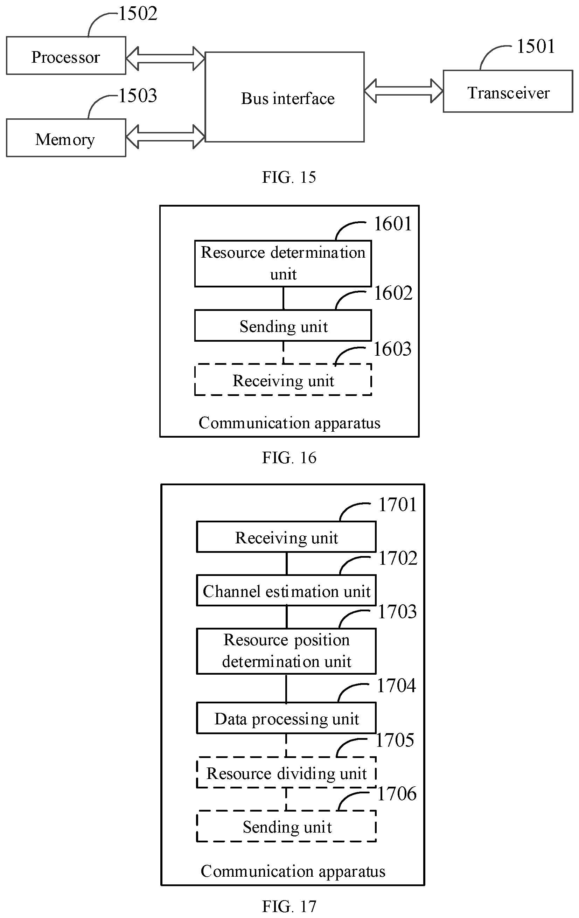

On a network device side, an embodiment of the present application provides a communication apparatus. A terminal sends data to a network device through a frequency domain resource and a time domain resource. The frequency domain resource includes multiple sub-bands, and the time domain resource includes multiple sub-segments. As shown in FIG. 15, on a data plane scheduling control node side of a data service system, the communication apparatus may include a transceiver 1501, a processor 1502, and a memory 1503.

The transceiver 1501 is configured to receive and send data under control of the processor 1502.

In FIG. 15, a bus architecture may include any number of interconnected buses and bridges, through which various circuits, specifically one or more processors represented by the processor 1402 and a memory represented by the memory 1403, are linked together. The bus architecture may further link together various other circuits such as a peripheral device, a regulator, and a power management circuit, etc., which are well known in the art and therefore will not be further described herein. A bus interface provides an interface. The transceiver 1501 may be multiple components, i.e., including a transmitter and a receiver, providing units for communicating with various other apparatus on transmission media, these transmission media including a wireless channel, a wired channel, a fiber optic cable, and other transmission media. The processor 1502 is responsible for managing the bus architecture and general processing, and the memory 1503 may store data used by the processor 1502 when performing operations.

The processor 1502 may be a CPU, an ASIC, an FPGA or a CPLD. The processor may also adopt a multi-core architecture.

The processor 1502, by invoking a computer program stored in the memory 1503, is configured to execute, according to an obtained executable instruction, the communication methods provided by the embodiments of the present application. The processor and the memory may also be physically arranged separately.

Specifically, the processor 1502 is configured to perform following operations: receiving target data from a terminal on a target resource, where in a time-frequency resource for uplink data transmission, a frequency domain resource includes multiple sub-bands and a time domain resource includes multiple sub-segments, the target resource includes at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol; performing channel estimation on the target resource according to the preamble to obtain a channel estimation value; determining a transmission resource position of the data symbol according to the preamble; and performing, according to the preamble, the channel estimation value, and the transmission resource position of the data symbol, processing on the data symbol to obtain the target data.

In one possible implementation, in the same sub-segment, the preamble and the data symbol are time-division multiplexed.

In one possible implementation, in the same sub-segment, there is a time interval between the preamble and the data symbol, and/or, a length of a time domain resource occupied by the data symbol is an integer multiple of a length of a time domain resource occupied by the preamble.

In one possible implementation, the number of transmissions of the target data is multiple, in each transmission of the target data, the sub-band occupied by the preamble is the same as the sub-band occupied by the data symbol, and the sub-segment occupied by the preamble is the same as the sub-segment occupied by the data symbol.

In one possible implementation, the target resource includes: at least two sub-bands and at least one sub-segment; or, at least one sub-band of the multiple sub-bands and at least two sub-segments of the multiple sub-segments; or, at least two sub-bands of the multiple sub-bands and at least two sub-segments of the multiple sub-segments.

In one possible implementation, the sub-band and the sub-segment of the target resource form multiple time-frequency resources, in the multiple time-frequency resources, one time-frequency resource is used for one transmission of the target data, and each of the time-frequency resources adopts same sub-carrier space.

In one possible implementation, in the multiple transmissions of the target data, a same data symbol of the target data is repeatedly transmitted; or, data symbols of different coded versions of the target data are transmitted.

In one possible implementation, in the multiple transmissions of the target data, a same preamble of the target data is repeatedly transmitted; or, multiple preambles associated with the target data are transmitted, and there is a mapping relationship between the multiple preambles.

In one possible implementation, the processor 1502 is further configured to perform following operations: performing channel estimation respectively based on each preamble among the same preamble transmitted repeatedly or the multiple associated preambles, to obtain a channel estimation value respectively corresponding to each preamble, where the channel estimation value corresponding to the preamble includes a channel estimation value of a sub-band and a sub-segment where the preamble is located.

In one possible implementation, the processor 1502 is further configured to perform following operations: determining metadata bits of the target data according to the preamble; and determining the transmission resource position according to the metadata bits.

In one possible implementation, the processor 1502 is further configured to perform following operations: in a channel resource for uplink data transmission, dividing the frequency domain resource into the multiple sub-bands, and dividing the time domain resource into the multiple sub-segments; and sending first information to the terminal, where the first information indicates the multiple sub-bands and the multiple sub-segments.

It should be noted that the above-mentioned apparatus provided by the present application can implement all the method steps of the network device in the above-mentioned method embodiments, and can achieve a same technical effect, and same parts of this embodiment as the method embodiments and beneficial effects will not be specifically repeated herein.

On the terminal side, an embodiment of the present application further provides a communication apparatus. A terminal sends data to a network device through a frequency domain resource and a time domain resource. The frequency domain resource includes multiple sub-bands, and the time domain resource includes multiple sub-segments. As shown in FIG. 16, the communication apparatus includes: a resource determination unit 1601 and a sending unit 1602.

The resource determination unit 1601 is configured to determine a target resource for transmitting target data, where in a time-frequency resource for uplink data transmission, a frequency domain resource includes multiple sub-bands and a time domain resource includes multiple sub-segments, the target resource includes at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol; and the sending unit 1602 is configured to send the target data to the network device on the target resource.

In one possible implementation, in the same sub-segment, the preamble and the data symbol are time-division multiplexed.

In one possible implementation, in the same sub-segment, there is a time interval between the preamble and the data symbol, and/or, a length of a time domain resource occupied by the data symbol is an integer multiple of a length of a time domain resource occupied by the preamble.

In one possible implementation, the number of transmissions of the target data is multiple, in each transmission of the target data, the sub-band occupied by the preamble is the same as the sub-band occupied by the data symbol, and the sub-segment occupied by the preamble is the same as the sub-segment occupied by the data symbol.

In one possible implementation, the target resource includes: at least two sub-bands and at least one sub-segment; or, at least one sub-band of the multiple sub-bands and at least two sub-segments of the multiple sub-segments; or, at least two sub-bands of the multiple sub-bands and at least two sub-segments of the multiple sub-segments.

In one possible implementation, the sub-band and the sub-segment of the target resource form multiple time-frequency resources, in the multiple time-frequency resources, one time-frequency resource is used for one transmission of the target data, and each of the time-frequency resources adopts same sub-carrier space.

In one possible implementation, in the multiple transmissions of the target data, a same data symbol of the target data is repeatedly transmitted; or, data symbols of different coded versions of the target data are transmitted.

In one possible implementation, in the multiple transmissions of the target data, a same preamble of the target data is repeatedly transmitted; or, multiple preambles associated with the target data are transmitted, and there is a mapping relationship between the multiple preambles.

In one possible implementation, the resource determination unit 1601 is specifically configured to: determine metadata bits of the target data; determine the number of transmissions of the target data according to the metadata bits; determine a transmission resource position of the target data according to the metadata bits; and allocate, according to the number of the transmissions and the transmission resource position, the at least one sub-band of the multiple sub-bands and the at least one sub-segment of the multiple sub-segments to the target data to obtain the target resource.

In one possible implementation, the communication apparatus further includes: a receiving unit 1603, configured to receive first information from the network device, where the first information indicates the multiple sub-bands and the multiple sub-segments.

It should be noted that the above-mentioned apparatus provided by the present application can implement all the method steps of the terminal in the above-mentioned method embodiments, and can achieve a same technical effect, and same parts of this embodiment as the method embodiments and beneficial effects will not be specifically repeated herein.

On the network device side, an embodiment of the present application further provides a communication apparatus. A terminal sends data to a network device through a frequency domain resource and a time domain resource. The frequency domain resource includes multiple sub-bands, and the time domain resource includes multiple sub-segments. As shown in FIG. 17, the communication apparatus includes: a receiving unit 1701, a channel estimation unit 1702, a resource position determination unit 1703, and a data processing unit 1704.

The receiving unit 1701 is configured to receive target data from a terminal on a target resource, where in a time-frequency resource for uplink data transmission, a frequency domain resource includes multiple sub-bands and a time domain resource includes multiple sub-segments, the target resource includes at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol; the channel estimation unit 1702 is configured to perform channel estimation on the target resource according to the preamble, to obtain a channel estimation value; the resource position determination unit 1703 is configured to determine a transmission resource position of the data symbol according to the preamble; and the data processing unit 1704 is configured to perform, according to the preamble, the channel estimation value, and the transmission resource position of the data symbol, processing on the data symbol to obtain the target data.

In one possible implementation, in the same sub-segment, the preamble and the data symbol are time-division multiplexed.

In one possible implementation, in the same sub-segment, there is a time interval between the preamble and the data symbol, and/or, a length of a time domain resource occupied by the data symbol is an integer multiple of a length of a time domain resource occupied by the preamble.

In one possible implementation, the number of transmissions of the target data is multiple, in each transmission of the target data, the sub-band occupied by the preamble is the same as the sub-band occupied by the data symbol, and the sub-segment occupied by the preamble is the same as the sub-segment occupied by the data symbol.

In one possible implementation, the target resource includes: at least two sub-bands and at least one sub-segment; or, at least one sub-band of the multiple sub-bands and at least two sub-segments of the multiple sub-segments; or, at least two sub-bands of the multiple sub-bands and at least two sub-segments of the multiple sub-segments.

In one possible implementation, the sub-band and the sub-segment of the target resource form multiple time-frequency resources, in the multiple time-frequency resources, one time-frequency resource is used for one transmission of the target data, and each of the time-frequency resources adopts same sub-carrier space.

In one possible implementation, in the multiple transmissions of the target data, a same data symbol of the target data is repeatedly transmitted; or, data symbols of different coded versions of the target data are transmitted.

In one possible implementation, in the multiple transmissions of the target data, a same preamble of the target data is repeatedly transmitted; or, multiple preambles associated with the target data are transmitted, and there is a mapping relationship between the multiple preambles.

In one possible implementation, the channel estimation unit 1702 is specifically configured to: perform channel estimation respectively based on each preamble among the same preamble transmitted repeatedly or the multiple associated preambles, to obtain a channel estimation value respectively corresponding to each preamble, where the channel estimation value corresponding to the preamble includes a channel estimation value of a sub-band and a sub-segment where the preamble is located.

In one possible implementation, the resource position determination unit 1703 is specifically configured to: determine metadata bits of the target data according to the preamble; and determine the transmission resource position according to the metadata bits.

In one possible implementation, the communication apparatus further includes: a resource dividing unit 1705, configured to, in a channel resource for uplink data transmission, divide the frequency domain resource into the multiple sub-bands, and divide the time domain resource into the multiple sub-segments; and a sending unit 1706, configured to send first information to the terminal, where the first information indicates the multiple sub-bands and the multiple sub-segments.

It should be noted that the above-mentioned apparatus provided by the present application can implement all the method steps of the network device in the above-mentioned method embodiments, and can achieve a same technical effect, and same parts of this embodiment as the method embodiments and beneficial effects will not be specifically repeated herein.

It should be noted that division of units in the embodiments of the present application is illustrative, which is merely a logical function division, and alternative division methods may be employed in actual implementations. Additionally, in each of the embodiments of the present application, functional units may be integrated in one processing unit, or each unit may exist physically separately, or two or more units may be integrated into one unit. The integrated unit may be implemented in a form of hardware or in a form of a software functional unit.

If being implemented as a software functional unit and sold or used as an independent product, the integrated unit may be stored in a processor-readable storage medium. Based on this understanding, the technical solution of the present application, in essence, or a part contributing to the prior art, or all or part of the technical solution, may be embodied in a form of a software product. This computer software product is stored in a storage medium and includes several instructions for enabling a computer device (such as a personal computer, a server, or a network device, etc.) or a processor (processor) to execute all or part of the steps of the methods described in various embodiments of the present application. And the aforementioned storage medium includes: a USB flash drive, a portable hard disk, a read-only memory (Read-Only Memory, ROM), a random access memory (Random Access Memory, RAM), a magnetic disk, an optical disc, or other various media that can store program codes.

An embodiment of the present application provides a processor-readable storage medium, where the processor-readable storage medium stores a computer program, and the computer program is used to enable a processor to execute any method related to the communication methods provided by the embodiments of the present application. The processor is enabled to implement the method steps of the communication methods in the above-mentioned method embodiments, and can achieve a same technical effect, and same parts of this embodiment as the method embodiments and beneficial effects will not be specifically repeated herein.

The processor-readable storage medium may be any available medium or data storage device that the processor can access, including but not limited to a magnetic storage device (such as a floppy disk, a hard disk, a magnetic tape, a magneto-optical disks (MO), etc.), an optical storage device (such as a CD, a DVD, a BD, an HVD, etc.), and a semiconductor storage device (such as a ROM, an EPROM, an EEPROM, a non-volatile memory (NAND FLASH), a solid-state drive (SSD)), etc.

Those skilled in the art should understand that the embodiments of the present application may be implemented as methods, systems, or computer program products. Therefore, the present application may take a form of a fully hardware embodiment, a fully software embodiment, or an embodiment combining software and hardware aspects. Moreover, the present application may take a form of a computer program product implemented on one or more computer-usable storage media (including, but not limited to, a disk storage and an optical storage, etc.) containing computer-usable program codes.

The present application is described with reference to flowcharts and/or block diagrams of the methods, the apparatuses, and the computer program products according to the embodiments of the present application. It should be understood that each of processes and/or blocks in the flowcharts and/or the block diagrams, as well as a combination of the processes and/or the blocks in the flowcharts and/or the block diagrams, may be implemented by computer executable instructions. These computer executable instructions may be provided to a general-purpose computer, a dedicated computer, an embedded processor, or other programmable data processing devices' processors to produce a machine, such that instructions executed by a computer or other programmable data processing devices' processors produce an apparatus configured to implement functions specified in one or more processes of the flowcharts or one or more blocks of the block diagrams.

These processor executable instructions may also be stored in a processor-readable memory that can guide a computer or other programmable data processing devices to operate in a specific way. This enables the instructions stored in the processor-readable storage medium to produce a manufactured product including an instruction apparatus, which implements functions specified in one or more processes in the flowcharts, and/or in one or more blocks in the block diagrams.

These processor executable instructions may also be loaded onto a computer or other programmable data processing devices, such that a series of operation steps are executed on the computer or other programmable device to produce computer-implemented processing, such that instructions executed on the computer or other programmable device provide steps for implementing functions specified in one or more processes in the flowcharts, and/or in one or more blocks in the block diagrams.

Obviously, those skilled in the art can make various modifications and variations to the present application without departing from the spirit and scope of the present application. Thus, if these modifications and variations of the present application fall within the scope of claims in the present application and technical equivalents thereof, the present application is intended to encompass these modifications and variations as well.

## Claims

1. A communication method, **characterized by** being applied to a terminal, wherein the communication method comprises:
determining a target resource for transmitting target data, wherein in a time-frequency resource for uplink data transmission, a frequency domain resource comprises multiple sub-bands and a time domain resource comprises multiple sub-segments, the target resource comprises at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol; and
sending the target data to a network device on the target resource.

2. The communication method according to claim 1, **characterized in that**, in the same sub-segment, the preamble and the data symbol are time-division multiplexed.

3. The communication method according to claim 2, **characterized in that**, in the same sub-segment, there is a time interval between the preamble and the data symbol, and/or, a length of a time domain resource occupied by the data symbol is an integer multiple of a length of a time domain resource occupied by the preamble.

4. The communication method according to any one of claims 1 to 3, **characterized in that** the number of transmissions of the target data is multiple, in each transmission of the target data, the sub-band occupied by the preamble is the same as the sub-band occupied by the data symbol, and the sub-segment occupied by the preamble is the same as the sub-segment occupied by the data symbol.

5. The communication method according to claim 4, **characterized in that** the target resource comprises:
at least two sub-bands of the multiple sub-bands and at least one sub-segment of the multiple sub-segments;
or, at least one sub-band of the multiple sub-bands and at least two sub-segments of the multiple sub-segments;
or, at least two sub-bands of the multiple sub-bands and at least two sub-segments of the multiple sub-segments.

6. The communication method according to claim 4, **characterized in that** the sub-band and the sub-segment of the target resource form multiple time-frequency resources, in the multiple time-frequency resources, one time-frequency resource is used for one transmission of the target data, and each of the time-frequency resources adopts same sub-carrier space.

7. The communication method according to claim 4, **characterized in that**, in the multiple transmissions of the target data, a same data symbol of the target data is repeatedly transmitted; or, data symbols of different coded versions of the target data are transmitted.

8. The communication method according to claim 4, **characterized in that** in the multiple transmissions of the target data, a same preamble of the target data is repeatedly transmitted; or, multiple preambles associated with the target data are transmitted, and there is a mapping relationship between the multiple preambles.

9. The communication method according to any one of claims 1 to 3, **characterized in that** the determining the target resource for transmitting the target data comprises:
determining metadata bits of the target data;
determining the number of transmissions of the target data according to the metadata bits;
determining a transmission resource position of the target data according to the metadata bits; and
allocating, according to the number of the transmissions and the transmission resource position, the at least one sub-band of the multiple sub-bands and the at least one sub-segment of the multiple sub-segments to the target data to obtain the target resource.

10. The communication method according to any one of claims 1 to 3, **characterized by**, before the determining the target resource for transmitting the target data, further comprising:
receiving first information from the network device, wherein the first information indicates the multiple sub-bands and the multiple sub-segments.

11. A communication method, **characterized by** being applied to a network device, wherein the communication method comprises:
receiving target data from a terminal on a target resource, wherein in a time-frequency resource for uplink data transmission, a frequency domain resource comprises multiple sub-bands and a time domain resource comprises multiple sub-segments, the target resource comprises at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol;
performing channel estimation on the target resource according to the preamble to obtain a channel estimation value;
determining a transmission resource position of the data symbol according to the preamble; and
performing, according to the preamble, the channel estimation value, and the transmission resource position of the data symbol, processing on the data symbol to obtain the target data.

12. The communication method according to claim 11, **characterized in that**, in the same sub-segment, the preamble and the data symbol are time-division multiplexed.

13. The communication method according to claim 12, **characterized in that**, in the same sub-segment, there is a time interval between the preamble and the data symbol, and/or, a length of a time domain resource occupied by the data symbol is an integer multiple of a length of a time domain resource occupied by the preamble.

14. The communication method according to any one of claims 11 to 13, **characterized in that** the number of transmissions of the target data is multiple, in each transmission of the target data, the sub-band occupied by the preamble is the same as the sub-band occupied by the data symbol, and the sub-segment occupied by the preamble is the same as the sub-segment occupied by the data symbol.

15. The communication method according to claim 14, **characterized in that** the target resource comprises:
at least two sub-bands of the multiple sub-bands and at least one sub-segment of the multiple sub-segments;
or, at least one sub-band of the multiple sub-bands and at least two sub-segments of the multiple sub-segments;
or, at least two sub-bands of the multiple sub-bands and at least two sub-segments of the multiple sub-segments.

16. The communication method according to claim 14, **characterized in that** the sub-band and the sub-segment of the target resource form multiple time-frequency resources, in the multiple time-frequency resources, one time-frequency resource is used for one transmission of the target data, and each of the time-frequency resources adopts same sub-carrier space.

17. The communication method according to claim 14, **characterized in that**, in the multiple transmissions of the target data, a same data symbol of the target data is repeatedly transmitted; or, data symbols of different coded versions of the target data are transmitted.

18. The communication method according to claim 14, **characterized in that**, in the multiple transmissions of the target data, a same preamble of the target data is repeatedly transmitted; or, multiple preambles associated with the target data are transmitted, and there is a mapping relationship between the multiple preambles.

19. The communication method according to claim 18, **characterized in that** the performing the channel estimation on the target resource according to the preamble to obtain the channel estimation value comprises:
performing channel estimation respectively based on each preamble among the same preamble transmitted repeatedly or the multiple associated preambles, to obtain a channel estimation value respectively corresponding to each preamble, wherein the channel estimation value corresponding to the preamble comprises a channel estimation value of a sub-band and a sub-segment where the preamble is located.

20. The communication method according to any one of claims 11 to 13, **characterized in that** the determining the transmission resource position of the data symbol according to the preamble comprises:
determining metadata bits of the target data according to the preamble; and
determining the transmission resource position according to the metadata bits.

21. The communication method according to any one of claims 11 to 13, **characterized by**, before the receiving the target data from the terminal on the target resource, further comprising:
in a channel resource for uplink data transmission, dividing the frequency domain resource into the multiple sub-bands, and dividing the time domain resource into the multiple sub-segments; and
sending first information to the terminal, wherein the first information indicates the multiple sub-bands and the multiple sub-segments.

22. A communication apparatus, **characterized by** being applied to a terminal, wherein the communication apparatus comprises a memory, a transceiver, and a processor;
the memory is configured to store a computer program;
the transceiver is configured to receive and transmit data under control of the processor; and
the processor is configured to read the computer program in the memory and execute following operations:
determining a target resource for transmitting target data, wherein in a time-frequency resource for uplink data transmission, a frequency domain resource comprises multiple sub-bands and a time domain resource comprises multiple sub-segments, the target resource comprises at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol; and
sending the target data to a network device on the target resource.

23. A communication apparatus, **characterized by** being applied to a network device, wherein the communication apparatus comprises a memory, a transceiver, and a processor;
the memory is configured to store a computer program;
the transceiver is configured to receive and transmit data under control of the processor; and
the processor is configured to read the computer program in the memory and execute following operations:
receiving target data from a terminal on a target resource, wherein in a time-frequency resource for uplink data transmission, a frequency domain resource comprises multiple sub-bands and a time domain resource comprises multiple sub-segments, the target resource comprises at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol;
performing channel estimation on the target resource according to the preamble to obtain a channel estimation value;
determining a transmission resource position of the data symbol according to the preamble; and
performing, according to the preamble, the channel estimation value, and the transmission resource position of the data symbol, processing on the data symbol to obtain the target data.

24. A communication apparatus, **characterized by** being applied to a terminal, wherein the communication apparatus comprises:
a resource determination unit, configured to determine a target resource for transmitting target data, wherein in a time-frequency resource for uplink data transmission, a frequency domain resource comprises multiple sub-bands and a time domain resource comprises multiple sub-segments, the target resource comprises at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol; and
a sending unit, configured to send the target data to a network device on the target resource.

25. The communication apparatus according to claim 24, **characterized in that**, in the same sub-segment, the preamble and the data symbol are time-division multiplexed.

26. The communication apparatus according to claim 25, **characterized in that**, in the same sub-segment, there is a time interval between the preamble and the data symbol, and/or, a length of a time domain resource occupied by the data symbol is an integer multiple of a length of a time domain resource occupied by the preamble.

27. The communication apparatus according to any one of claims 24 to 26, **characterized in that** the number of transmissions of the target data is multiple, in each transmission of the target data, the sub-band occupied by the preamble is the same as the sub-band occupied by the data symbol, and the sub-segment occupied by the preamble is the same as the sub-segment occupied by the data symbol.

28. The communication apparatus according to claim 27, **characterized in that** the target resource comprises:
at least two sub-bands of the multiple sub-bands and at least one sub-segment of the multiple sub-segments;
or, at least one sub-band of the multiple sub-bands and at least two sub-segments of the multiple sub-segments;
or, at least two sub-bands of the multiple sub-bands and at least two sub-segments of the multiple sub-segments.

29. The communication apparatus according to claim 27, **characterized in that** the sub-band and the sub-segment of the target resource form multiple time-frequency resources, in the multiple time-frequency resources, one time-frequency resource is used for one transmission of the target data, and each of the time-frequency resources adopts same sub-carrier space.

30. The communication apparatus according to claim 27, **characterized in that**, in the multiple transmissions of the target data, a same data symbol of the target data is repeatedly transmitted; or, data symbols of different coded versions of the target data are transmitted.

31. The communication apparatus according to claim 27, **characterized in that**, in the multiple transmissions of the target data, a same preamble of the target data is repeatedly transmitted; or, multiple preambles associated with the target data are transmitted, and there is a mapping relationship between the multiple preambles.

32. The communication apparatus according to any one of claims 24 to 26, **characterized in that** the resource determination unit is specifically configured to:
determine metadata bits of the target data;
determine the number of transmissions of the target data according to the metadata bits;
determine a transmission resource position of the target data according to the metadata bits; and
allocate, according to the number of the transmissions and the transmission resource position, the at least one sub-band of the multiple sub-bands and the at least one sub-segment of the multiple sub-segments to the target data to obtain the target resource.

33. The communication apparatus according to any one of claims 24 to 26, **characterized by** further comprising:
a receiving unit, configured to receive first information from the network device, wherein the first information indicates the multiple sub-bands and the multiple sub-segments.

34. A communication apparatus, **characterized by** being applied to a network device, wherein the communication apparatus comprises:
a receiving unit, configured to receive target data from a terminal on a target resource, wherein in a time-frequency resource for uplink data transmission, a frequency domain resource comprises multiple sub-bands and a time domain resource comprises multiple sub-segments, the target resource comprises at least one sub-band of the multiple sub-bands and at least one sub-segment of the multiple sub-segments, a sub-band occupied by a preamble of the target data is the same as a sub-band occupied by a data symbol of the target data, and a sub-segment occupied by the preamble is the same as a sub-segment occupied by the data symbol;
a channel estimation unit, configured to perform channel estimation on the target resource according to the preamble, to obtain a channel estimation value;
a resource position determination unit, configured to determine a transmission resource position of the data symbol according to the preamble; and
a data processing unit, configured to perform, according to the preamble, the channel estimation value, and the transmission resource position of the data symbol, processing on the data symbol to obtain the target data.

35. The communication apparatus according to claim 24, **characterized in that**, in the same sub-segment, the preamble and the data symbol are time-division multiplexed.

36. The communication apparatus according to claim 35, **characterized in that**, in the same sub-segment, there is a time interval between the preamble and the data symbol, and/or, a length of a time domain resource occupied by the data symbol is an integer multiple of a length of a time domain resource occupied by the preamble.

37. The communication apparatus according to any one of claims 34 to 36, **characterized in that** the number of transmissions of the target data is multiple, in each transmission of the target data, the sub-band occupied by the preamble is the same as the sub-band occupied by the data symbol, and the sub-segment occupied by the preamble is the same as the sub-segment occupied by the data symbol.

38. The communication apparatus according to claim 37, **characterized in that** the target resource comprises:
at least two sub-bands of the multiple sub-bands and at least one sub-segment of the multiple sub-segments;
or, at least one sub-band of the multiple sub-bands and at least two sub-segments of the multiple sub-segments;
or, at least two sub-bands of the multiple sub-bands and at least two sub-segments of the multiple sub-segments.

39. The communication apparatus according to claim 37, **characterized in that** the sub-band and the sub-segment of the target resource form multiple time-frequency resources, in the multiple time-frequency resources, one time-frequency resource is used for one transmission of the target data, and each of the time-frequency resources adopts same sub-carrier space.

40. The communication apparatus according to claim 37, **characterized in that**, in the multiple transmissions of the target data, a same data symbol of the target data is repeatedly transmitted; or, data symbols of different coded versions of the target data are transmitted.

41. The communication apparatus according to claim 37, **characterized in that**, in the multiple transmissions of the target data, a same preamble of the target data is repeatedly transmitted; or, multiple preambles associated with the target data are transmitted, and there is a mapping relationship between the multiple preambles.

42. The communication apparatus according to claim 41, **characterized in that** the channel estimation unit is specifically configured to:
perform channel estimation respectively based on each preamble among the same preamble transmitted repeatedly or the multiple associated preambles, to obtain a channel estimation value respectively corresponding to each preamble, wherein the channel estimation value corresponding to the preamble comprises a channel estimation value of a sub-band and a sub-segment where the preamble is located.

43. The communication apparatus according to any one of claims 34 to 36, **characterized in that** the resource position determination unit is specifically configured to:
determine metadata bits of the target data according to the preamble; and
determine the transmission resource position according to the metadata bits.

44. The communication apparatus according to any one of claims 34 to 36, **characterized by** further comprising:
a resource dividing unit, configured to, in a channel resource for uplink data transmission, divide the frequency domain resource into the multiple sub-bands, and divide the time domain resource into the multiple sub-segments; and
a sending unit, configured to send first information to the terminal, wherein the first information indicates the multiple sub-bands and the multiple sub-segments.

45. A processor-readable storage medium, **characterized in that** the processor-readable storage medium stores a computer program, and the computer program is used to enable the processor to execute the communication method according to any one of claims 1 to 21.
